(19) Europäisches Patentamt
European Patent Office
Office européen des brevets

(11) **EP 3 143 669 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **15722192.0**

(22) Anmeldetag: **12.05.2015**

(51) Int Cl.:
*H01S 3/00* (2006.01)    *G02F 1/35* (2006.01)

(86) Internationale Anmeldenummer:
**PCT/EP2015/060484**

(87) Internationale Veröffentlichungsnummer:
**WO 2015/173245 (19.11.2015 Gazette 2015/46)**

(54) **VERFAHREN UND ANORDNUNG ZUR SPEKTRALEN VERBREITERUNG VON LASERPULSEN FÜR DIE NICHTLINEARE PULSKOMPRESSION**

METHOD AND ARRANGEMENT FOR SPECTRAL BROADENING OF LASER PULSES FOR NON-LINEAR PULSE COMPRESSION

PROCÉDÉ ET ENSEMBLE D'ÉLARGISSEMENT SPECTRAL D'IMPULSIONS LASER POUR LA COMPRESSION D'IMPULSION NON LINÉAIRE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **15.05.2014 DE 102014007159**

(43) Veröffentlichungstag der Anmeldung:
**22.03.2017 Patentblatt 2017/12**

(73) Patentinhaber:
• **Fraunhofer-Gesellschaft zur Förderung der angewandten Forschung e.V.**
**80686 München (DE)**
• **Max-Planck-Gesellschaft zur Förderung der Wissenschaften e.V.**
**80539 München (DE)**

(72) Erfinder:
• **VERNALEKEN, Andreas**
**80799 München (DE)**
• **RUSSBÜLDT, Peter**
**52134 Herzogenrath (DE)**
• **SARTORIUS, Thomas**
**52070 Aachen (DE)**
• **SCHULTE, Jan**
**52064 Aachen (DE)**
• **WEITENBERG, Johannes**
**52070 Aachen (DE)**

(74) Vertreter: **Gagel, Roland**
**Patentanwaltskanzlei**
**Dr. Roland Gagel**
**Landsberger Strasse 480 a**
**D-81241 München (DE)**

(56) Entgegenhaltungen:
**US-A1- 2013 250 982**

• **DURFEE III C G ET AL: "PULSE COMPRESSION IN A SELF-FILTERING ND:YAG REGENERATIVE AMPLIFIER", OPTICS LETTERS, OPTICAL SOCIETY OF AMERICA, US, Bd. 17, Nr. 1, 1. Januar 1992 (1992-01-01) , Seiten 37-39, XP000243668, ISSN: 0146-9592**

**Beschreibung**

**Technisches Anwendungsgebiet**

Die vorliegende Erfindung betrifft ein Verfahren zur spektralen Verbreiterung von Laserpulsen für die nichtlineare Pulskompression, bei dem die Laserpulse in eine optische Anordnung eingeführt werden, in der sie durch wenigstens ein Medium mit nichtlinearen optischen Eigenschaften propagieren, in dem die Laserpulse durch Selbstphasenmodulation eine nichtlineare Phase erhalten. Die Erfindung betrifft auch eine optische Anordnung, die für die Durchführung des Verfahrens ausgebildet ist.

Gepulste Laserstrahlung hat vielfältige Anwendungen in Wissenschaft und Industrie. Dabei spielen sowohl die Pulsdauer als auch die Pulsenergie und die mittlere Leistung eine Rolle. Prinzipiell ist eine kleine Pulsdauer für viele Anwendungen vorteilhaft. Für die Beobachtung von physikalischen Prozessen auf kurzen Zeitskalen sind Pulse mit entsprechender Pulsdauer erforderlich. Kurze Pulse erlauben große Intensitäten, die effiziente nichtlineare / parametrische Prozesse wie Frequenzvervielfachung ermöglichen. Große Intensitäten können außerdem zu nichtlinearer Absorption führen, die z.B. bei der Glasinnengravur, ISLE (in-volume selective laser etching), der Augenchirurgie oder bei der Zwei-Photonen-Mikroskopie ausgenutzt wird. Für die Materialbearbeitung ist insbesondere von Bedeutung, dass mit einer kleinen Pulsdauer durch eine kleine Wärmeeinflusszone und Schmelzfilmdicke, sowie durch die Vermeidung der Wechselwirkung mit dem Materialdampfplasma, ein präziserer Abtrag möglich ist.

Die Pulsdauer einer Laserstrahlquelle ist begrenzt durch die Verstärkungsbandbreite des Lasermediums bzw. des Verstärkermediums. Die Wahl des Mediums begrenzt aber durch die Materialeigenschaften auch weitere Parameter der Laserstrahlung, insbesondere die erreichbare mittlere Leistung durch das thermische Management (Heizleistungsgrad, Wärmeleitfähigkeit, thermischer Ausdehnungskoeffizient, Temperaturabhängigkeit des Brechungsindex, Bruchgrenze, thermisches Quenching etc.). Um bestimmte Parameter der Laserstrahlung zu erreichen, ist daher ggf. eine nachträgliche Kompression der Pulse hilfreich. Das gilt z.B. für ultrakurze Pulse aus Yb-basierten Laserstrahlquellen, die eine große mittlere Leistung ermöglichen. Je nach Wirtsmedium und Laserarchitektur (Oszillator oder MOPA) sind mit Yb-dotierten Medien Pulsdauern von z.B. ca. 800 fs (Yb:YAG) oder ca. 200 fs (Yb:Glas) möglich. Diese Pulsdauer kann z.B. auf ca. 25 fs komprimiert werden (Ch. Jocher et al., "Sub 25 fs pulses from solid-core nonlinear compression stage at 250 W of average power," Opt. Lett. 37, 4407-4409 (2012); S. Hädrich et al., "Nonlinear compression to sub-30-fs, 0.5 mJ pulses at 135 W of average power," Opt. Lett. 38, 3866-3869 (2013)). Auch kleinere Kompressionsfaktoren von z.B. 800 fs auf 200 fs sind für viele Anwendungen interessant, da sich bereits dadurch eine deutliche Verbesserung der Qualität beim Abtrag ergibt. Dabei werden Pulsenergien im Bereich einiger 10 $\mu$J benötigt, für die die Kompression in Glasfasern nicht anwendbar ist.

**Stand der Technik**

Die nichtlineare Pulskompression mittels spektraler Verbreiterung durch Selbstphasenmodulation (SPM) und anschließenden Entfernens des Chirps ist ein verbreitetes Verfahren. Die spektrale Verbreiterung wird dabei durch die Kerr-Nichtlinearität (Änderung des Brechungsindex $\Delta n = n_2 I$ mit der Intensität $I$, nichtlinearer Brechungsindex $n_2$) in einem nichtlinearen Medium erreicht. Durch die zeitliche Einhüllende der Pulsintensität $I(t)$ wird die Phase des Pulses zeitlich schnell moduliert gemäß $\phi(t) = k_n \Delta n\, L = k_n n_2 I(t) L$, mit der Wellenzahl $k_n$ und der Propagationslänge $L$ im Medium. Dadurch werden neue Frequenzen erzeugt gemäß $\omega = -\partial_t \phi(t)$. Das Spektrum des Laserpulses wird also bei der Propagation im nichtlinearen Medium kontinuierlich verbreitert. Bei vernachlässigbarer Dispersion bleibt die Pulsform dabei konstant, der Puls wird also gechirpt. Anschließend kann der Puls durch Entfernen des Chirps komprimiert werden.

Die Intensität variiert aber nicht nur zeitlich sondern auch räumlich gemäß dem Strahlprofil $I(x, y)$, das hier als gaußförmig angenommen wird. Daraus ergeben sich zwei Konsequenzen. Erstens ist die spektrale Verbreiterung nicht gleichmäßig über dem Strahlprofil, sondern stärker auf der Strahlachse, zweitens ergibt sich eine durch den Puls induzierte (für $n_2 > 0$) fokussierende Linse (Kerrlinse), deren Brechkraft sich wiederum gemäß der zeitlichen Einhüllenden des Pulses ändert. Dadurch ist der Puls nach der spektralen Verbreiterung ggf. nicht vollständig komprimierbar und die Strahlqualität verschlechtert.

Beide genannten Probleme können dadurch gelöst werden, dass die Strahlung in einem Wellenleiter geführt wird. Dadurch wird die Intensität über einer langen Propagation im nichtlinearen Medium groß gehalten und es kann eine große nichtlineare Phase $\phi_{NL} = k_n n_2 I_m L$ aufgesammelt werden, wobei die Wirkung der Kerrlinse klein ist gegen die Fokussierung durch die Führung im Wellenleiter. Der Einfluss der (zeitabhängigen) Kerrlinse ist daher gering. Aberrationen der Kerrlinse werden in einem Grundmode-Wellenleiter herausgebeugt. Die nichtlineare Phase kann über die Länge des Wellenleiters beliebig groß gewählt werden und ist nur durch Verluste und Dispersion im Wellenleiter begrenzt. Bei der Propagation im Wellenleiter wird das Strahlprofil so durchgemischt, dass sich eine über das Profil gleichmäßige spektrale Verbreiterung ergibt. Die Pulse sind daher gut komprimierbar und die Strahlqualität erhalten.

Bei Führung im Wellenleiter kann zwar die nichtlineare Phase sehr groß werden, die Pulsleistung hingegen ist begrenzt. Für Pulsleistungen größer als die kritische Leistung für Selbstfokussierung $P_{crit} = \lambda_0^2/(2\pi n n_2)$, ist die fokussierende Wirkung der Kerrlinse stärker als die natürliche Divergenz des Strahls, so dass der Strahl bei der Propagation zunehmend fokussiert wird und schließlich das Medium zerstört (katastrophale Selbstfokussierung). Diese Limitierung kann nicht durch eine zeitliche Streckung der Pulse zur Verringerung der Pulsleistung umgangen werden, wie sie in Verstärkern eingesetzt wird (chirped pulse amplification, CPA), da die spektrale Verbreiterung vom Chirp des Pulses abhängt.

Als Wellenleiter werden Quarzglasfasern oder gasgefüllte Kapillaren verwendet. Für Quarzglas und 1 $\mu$m Wellenlänge ist mit $n_2 = 2{,}7 \cdot 10^{-16}$ cm$^2$/W die kritische Leistung $P_{crit} = 4$ MW, was bei einer Pulsdauer von $\tau = 800$ fs einer Pulsenergie von $E_{crit} = 3$ $\mu$J entspricht. Etwas größere Pulsenergien sind durch die Einstellung von zirkularer Polarisation der Strahlung in der Faser ($P_{crit} = 6$ MW), sowie durch DPC (divided pulse compression), d.h. durch zeitliches Aufteilen der Pulse und Überlagerung nach der Verbreiterung möglich (A. Klenke et al., "Divided-pulse nonlinear compression," Opt. Lett. 38, 4593-4596 (2013)). Nach dem Stand der Technik ist die nichtlineare Kompression in Glasfasern aber durch die katastrophale Selbstfokussierung auf Pulsenergien $E < 5$ $\mu$J begrenzt.

Um größere Pulsenergien zu komprimieren, kann die kritische Leistung vergrößert werden, d.h. ein nichtlineares Medium mit kleinerem nichtlinearen Brechungsindex $n_2$ gewählt werden. Dazu werden Edelgase benutzt, deren Nichtlinearität außerdem über den Gasdruck $p$ eingestellt werden kann. Mögliche Werte sind z.B. $\eta_2 = n_2/p = 0{,}29 \cdot 10^{-20}$ cm$^2$/W/bar (Helium), $9{,}8 \cdot 10^{-20}$ cm$^2$/W/bar (Argon) oder $45{,}2 \cdot 10^{-20}$ cm$^2$/W/bar (Xenon). Die Führung der Strahlung erfolgt in einer Glaskapillare. Daraus ergibt sich, neben der Begrenzung der Pulsenergie nach oben durch Selbstfokussierung, eine Begrenzung der Pulsenergie nach unten. Um eine hinreichende nichtlineare Phase aufzusammeln, darf die Pulsenergie nicht zu klein sein, da das Produkt aus Länge der Kapillare und der Intensität (gegeben durch den Querschnitt der Kapillare) nicht beliebig groß gewählt werden kann. Die Führung der Strahlung basiert nicht auf Totalreflexion wie in einer Quarzglasfaser, die eine nahezu verlustfreie Führung erlaubt, sondern auf Reflexion durch streifenden Einfall an der Wand der Kapillare. Da der Reflexionsgrad für endliche Einfallswinkel gegen die Oberfläche kleiner als eins ist, ist die Führung verlustbehaftet. Dabei ergibt ein kleinerer Querschnitt der Kapillare einen größeren Divergenzwinkel und damit größere Verluste bei der Reflexion, wodurch die Länge der Kapillare limitiert ist. Eine zusätzliche Limitierung ist die Erzeugung eines Plasmas und Absorption darin. Da der nichtlineare Brechungsindex bei Atmosphärendruck etwa vier Größenordnung kleiner ist als in Dielektrika und der Gasdruck nicht beliebig groß gewählt werden kann, eignet sich dieses Verfahren nur für deutlich größere Pulsenergien von ca. $E > 200$ $\mu$J (J. Rothhardt et al., "1 MHz repetition rate hollow fiber pulse compression to sub-100-fs duration at 100 W average power," Opt. Lett. 36, 4605-4607 (2011)).

Eine Alternative zur Gaskapillare ist die Führung der Strahlung in Hohlkernfasern z.B. vom Kagome-Typ, die mit einem Gas gefüllt werden können. Da die Verluste bei der Führung deutlich geringer sind als in einer Kapillare (einige 100 dB/km), kann die Faser lang sein (mehrere Meter) und es kann eine große nichtlineare Phase auch bei kleineren Pulsenergien aufgesammelt werden. Pulse mit Energien im Bereich 1-1000 $\mu$J wurden mittels spektraler Verbreiterung in Kagome-Fasern komprimiert (F. Emaury et al., "Beam delivery and pulse compression to sub-50 fs of a modelocked thin-disk laser in a gas-filled Kagome-type HC-PCF fiber," Opt. Express 21, 4986-4994 (2013); C. Fourcade-Dutin et al., "Milli-Joule femtosecond laser-pulse delivery and compression in hypocycloid core Kagome HC-PCF," CLEO 2013, CTh5C.7 (2013)). Die Verluste in der Faser und die unvollständige Koppeleffizienz können eine Limitierung der mittleren Leistung darstellen.

Es ist weiterhin möglich, Pulsleistungen größer als die kritische Leistung in einem nichtlinearen Medium zu führen, wenn es einen Mechanismus gibt, der der Selbstfokussierung entgegen wirkt. Ein solcher Mechanismus ist die Defokussierung durch ein Plasma, das über die große Intensität des Pulses durch Ionisation erzeugt wird. Ein Dichteprofil von freien Elektronen, das dem Intensitätsprofil des Pulses folgt, erzeugt eine Defokussierung, da der Brechungsindex durch die freien Elektronen herabgesetzt wird. Dieser Mechanismus kann sowohl in Gasen als auch in Festkörpern (M. Schulz et al., "Yb:YAG Innoslab amplifier: efficient high repetition rate subpicosecond pumping system for optical parametric chirped pulse amplification," Opt. Lett. 36, 2456-2458 (2011)) ausgenutzt werden, setzt aber voraus, dass eine hinreichende freie Elektronendichte erzeugt werden kann, ohne das Medium zu zerstören. Die Selbstfokussierung und Plasma-Defokussierung heben sich entweder gegenseitig auf oder wechseln sich entlang der Propagation ab. In einem solchen Filament kann eine starke spektrale Verbreiterung erreicht werden. In Gasen wird außerdem Selbstkompression beobachtet. Aufgrund der Ionisation ist das Verfahren stark verlustbehaftet und damit auch in der mittleren Leistung begrenzt.

Es ist außerdem prinzipiell möglich, eine spektrale Verbreiterung beim Durchgang durch ein nichtlineares Medium in freier Propagation und ohne Ionisierung zu erreichen. Für hinreichend kurze Propagationsstrecken im nichtlinearen Medium kann die katastrophale Selbstfokussierung im Medium vermieden und eine nichtlineare Phase von ca. $\phi_{NL} = 2\pi$ aufgesammelt werden. Allerdings ist in einer solchen Anordnung der Einfluss der Kerrlinse groß und es kommt zu einer starken zeitlichen Änderung der Strahlparameter sowie einer über dem Strahlprofil inhomogenen Verbreiterung, wodurch sich eine schlechte Komprimierbarkeit ergibt. Dieser Nachteil kann teilweise durch die nachträgliche räumliche Filterung eines Ausschnitts des Strahlprofils unter großen Verlusten ausgeglichen werden (E. Mevel et al., "Extracavity compression technique for high-energy femtosecond pulses," J. Op. Soc. Am. B 20, 105-108 (2003)).

Die existierenden Verfahren zur nichtlinearen Pulskompression weisen verschiedene Limitierungen auf. Dabei ist neben der Pulsenergie auch die mittlere Leistung limitiert. Bei verlustbehafteten Verfahren führt eine große Leistung zur Zerstörung von Komponenten. Dies gilt auch für unvollständige Einkopplung in einen Wellenleiter, die im Fall einer nicht beugungsbegrenzten Strahlqualität sowie durch Schwankungen der Strahlachse (Pointing-Stabilität) und Strahlparameter unvermeidlich ist. Es gibt bisher kein Verfahren, das die nichtlineare Kompression von Pulsen mit einigen 10 $\mu$J Pulsenergie bei 1 $\mu$m Wellenlänge und einigen 100 fs Pulsdauer und großen mittleren Leistungen von einigen 100 W erlaubt.

Eine nichtlineare Pulsformung welche nicht in einem Wellenleiter stattfindet ist aus C.G. Durfee III et al., Opt. Lett. 17 (1992) 37 bekannt.

Die Aufgabe der vorliegenden Erfindung besteht darin, ein Verfahren sowie eine Anordnung zur spektralen Verbreiterung von Laserpulsen für die nichtlineare Pulskompression anzugeben, die für Pulsleistungen größer als die kritische Leistung des für die spektrale Verbreiterung eingesetzten nichtlinearen Mediums anwendbar und unempfindlich gegen eine Variation der Strahllage, der Strahlparameter (q-Parameter) und des Strahlprofils des Laserstrahls sind.

## Darstellung der Erfindung

Die Aufgabe wird mit dem Verfahren und der Anordnung gemäß den Patentansprüchen 1 und 10 gelöst. Vorteilhafte Ausgestaltungen des Verfahrens sowie der Anordnung sind Gegenstand der abhängigen Patentansprüche.

Bei dem vorgeschlagenen Verfahren werden die Laserpulse in eine optische Anordnung eingeführt, in der sie abwechselnd durch wenigstens einen Abschnitt, der wenigstens ein Medium mit nichtlinearen optischen Eigenschaften enthält und in dem die Laserpulse durch Selbstphasenmodulation eine nichtlineare Phase erhalten, und wenigstens einen Abschnitt propagieren, in dem im Wesentlichen keine nichtlineare Phase durch Selbstphasenmodulation erzeugt wird. In diesen Zwischenabschnitten ist somit die Selbstphasenmodulation vernachlässigbar, d.h. dass eine durch Selbstphasenmodulation erzeugte nichtlineare Phase mindestens um den Faktor 10 geringer als in dem Medium mit den nichtlinearen optischen Eigenschaften ist. Die Anordnung weist Eigenmoden mit einem Gaußschen Strahl als Grundmode auf. Die Laserpulse werden dabei mit Strahlparametern in die Anordnung eingeführt, die im Wesentlichen den Strahlparametern der Anordnung (Eigen-q-Parameter) entsprechen. Die Pulsleistung der Laserpulse wird größer als die kritische Leistung des Mediums mit nichtlinearen optischen Eigenschaften gewählt. Die mit jedem Durchgang durch das Medium mit nichtlinearen optischen Eigenschaften bzw. den entsprechenden Abschnitt erzeugte nichtlineare Phase der Laserpulse wird durch Wahl der Länge des Mediums und der Intensität der Laserpulse so klein eingestellt, dass keine katastrophale Selbstfokussierung innerhalb des Mediums auftritt. Die Anzahl der Durchgänge zur Erzeugung der nichtlinearen Phase beträgt bei dem vorgeschlagenen Verfahren mindestens 10 und wird so gewählt, dass die Laserpulse beim Austritt aus der Anordnung eine gewünschte nichtlineare Phase für die Pulskompression aufweisen. Bei dem vorgeschlagenen Verfahren wird die optische Anordnung so dimensioniert, dass der Gouy-Parameter $\psi$ der Anordnung, der die bei einer (einzelnen) Propagation durch das Medium mit nichtlinearen optischen Eigenschaften und den Abschnitt ohne Selbstphasenmodulation von der Eigenmode aufgesammelte Gouy-Phase repräsentiert, weder in der Mitte noch direkt am Rand des Stabilitätsbereiches $0 \leq \psi \leq \pi$ der Anordnung liegt.

Die abwechselnde Propagation durch einen Abschnitt bzw. ein Medium mit nichtlinearen optischen Eigenschaften, im Folgenden auch als nichtlineares Medium bezeichnet, und einen daran anschließenden Abschnitt mit vernachlässigbarer Selbstphasenmodulation kann durch Bereitstellung eines einzelnen Elementes mit nichtlinearen optischen Eigenschaften, durch das die Laserpulse über eine Spiegelanordnung mehrfach propagieren, oder auch durch Bereitstellung mehrerer Elemente mit nichtlinearen optischen Eigenschaften erreicht werden, die in Propagationsrichtung der Laserpulse voneinander beabstandet hintereinander angeordnet werden. Auch bei der Anordnung mehrerer Elemente mit nichtlinearen optischen Eigenschaften ist ein mehrfacher Durchgang durch diese Anordnung vorteilhaft, um einen kompakten Aufbau zu erreichen.

Durch die Auftrennung der Erzeugung der für die spektrale Verbreiterung erforderlichen nichtlinearen Phase auf mindestens 10 Durchgänge durch ein nichtlineares Medium mit jeweils zwischenliegenden Abschnitten mit vernachlässigbarer Selbstphasenmodulation kann die Pulsleistung der Laserpulse größer gewählt werden als die bzgl. Selbstfokussierung kritische Leistung des nichtlinearen Mediums. Über den mehrfachen Durchgang durch ein nichtlineares Medium, d.h. den mehrfachen Durchgang durch ein einzelnes entsprechendes nichtlineares Element oder den ein- oder mehrfachen Durchgang durch mehrere voneinander beabstandete entsprechende nichtlineare Elemente, wird dennoch die gewünschte Größe der nichtlinearen Phase erreicht. Das Verfahren und die Anordnung eignen sich daher für Pulsenergien der Laserpulse, die mit Quarzglasfasern nicht erreichbar sind, und gleichzeitig für große mittlere Leistungen. Durch die besondere Dimensionierung der Anordnung wird der Ausgangs-q-Parameter der aus der Anordnung austretenden Laserstrahlung unabhängig von der Momentanleistung, d.h. er variiert nicht zeitlich über dem Puls, und der Puls ist gut komprimierbar. Die gewählte Anordnung reagiert unempfindlich auf Störungen des Strahlprofils. Das Verfahren und die Anordnung arbeiten ohne begrenzende Aperturen oder Filter, so dass die Gesamttransmission der Anordnung sehr hoch sein kann. Es handelt sich dabei um eine rein passive Anordnung ohne Verstärkung.

Vorzugsweise wird die Anordnung so dimensioniert, dass Resonanzen höherer transversaler Moden in der Anordnung vermieden werden und der Gouy-Parameter $\psi$ näher am Rand als an der Mitte des Stabilitätsbereiches liegt.

Die Dimensionierung der Anordnung hängt von der gewünschten Größe der nichtlinearen Phase ab. Für eine größere nichtlineare Phase muss eine höhere Anzahl an Durchgängen durch ein Medium mit nichtlinearen optischen Eigenschaften erfolgen, wobei für jede Größe der nichtlinearen Phase wiederum ein bestimmter Bereich des Gouy-Parameters vorteilhaft ist. Bei Nutzung eines Festkörpermediums für die Erzeugung der nichtlinearen Phase der Laserpulse werden das Material bzw. der nichtlineare Brechungsindex und die Dicke des Mediums in Abhängigkeit von der Intensität der Laserpulse im Medium vorzugsweise so gewählt, dass die mit jedem Durchgang durch das Medium erzeugte nichtlineare Phase $\leq \pi/10$ beträgt.

Die für eine gewünschte nichtlineare Phase erforderliche Dimensionierung der Anordnung kann durch eine Simulation ermittelt werden, wie sie auch für die in den Figuren der nachfolgenden näheren Beschreibung des Verfahrens dargestellten Diagramme durchgeführt wurde.

In einer Ausgestaltung des vorgeschlagenen Verfahrens sowie der zugehörigen Anordnung wird als Medium mit nichtlinearen optischen Eigenschaften ein gasförmiges Medium eingesetzt. Die nichtlinearen optischen Eigenschaften dieses gasförmigen Mediums, das sich beispielsweise in einer Gaszelle befinden kann, können dann über den Gasdruck eingestellt werden. In einer weiteren Ausgestaltung besteht auch die Möglichkeit, eine Gasmischung bei Atmosphärendruck einzusetzen und die nichtlinearen optischen Eigenschaften über den Partialdruck der beiden unterschiedlichen Gase einzustellen.

Die für die Durchführung des Verfahrens ausgebildete Anordnung weist in einer bevorzugten Ausgestaltung wenigstens zwei Spiegelelemente auf, an denen die Laserpulse mehrfach reflektiert werden. Vorzugsweise ist die Anordnung als Multipass-Zelle aufgebaut, bspw. in Form einer so genannten Herriott-Zelle. Das Medium kann bei einer Anordnung mit den Spiegelelementen als nichtlineares Element zwischen den Spiegelelementen angeordnet sein. Es kann jedoch auch durch wenigstens ein Spiegelsubstrat eines der Spiegelelemente oder durch die Spiegelsubstrate beider Spiegelelemente gebildet sein. In diesem Fall ist jeweils die Rückseite der Substrate mit der hoch reflektierenden Beschichtung versehen. Es können selbstverständlich auch mehrere nichtlineare Elemente als nichtlineares Medium zwischen den Spiegeln angeordnet sein, die dann wiederum einen gegenseitigen Abstand für die Gewährleistung eines zwischenliegenden Abschnittes mit vernachlässigbarer Selbstphasenmodulation aufweisen müssen. Die Dispersion beim Durchgang durch die Anordnung kann durch geeignete Spiegelbeschichtungen (gechirpte Spiegel) zumindest teilweise kompensiert werden. Die vorliegende Anordnung kann dabei als Linsenleiter beschrieben werden, der sowohl periodisch als auch nichtperiodisch aufgebaut sein kann.

Bei dem vorgeschlagenen Verfahren und der zugehörigen Anordnung wird die zur spektralen Verbreiterung erforderliche nichtlineare Phase auf hinreichend kleine Schritte aufgeteilt, die durch eine geeignete Propagation ohne Nichtlinearität getrennt werden. Dadurch wird die Limitierung auf Pulsleistungen kleiner als die kritische Leistung von Dielektrika überwunden und ein Pulsenergiebereich erschlossen, der durch spektrale Verbreiterung in Glasfasern nicht erreichbar ist. Da die Anordnung keine begrenzende Apertur besitzt und daher keine Leistung absorbiert oder abschneidet, ist sie in besonderer Weise geeignet, Pulse mit großer mittlerer Leistung zu komprimieren.

**Kurze Beschreibung der Zeichnungen**

Das vorgeschlagene Verfahren und die zugehörige Anordnung werden nachfolgend anhand von Ausführungsbeispielen in Verbindung mit den Zeichnungen nochmals näher erläutert. Hierbei zeigen:

Fig. 1 eine schematische Darstellung des Übergangs von einem Wellenleiter zu einem Linsenleiter für die spektrale Verbreiterung;

Fig. 2a ein Diagramm aus einer Simulation, das den Überlapp zwischen der Eigenmode mit und ohne Kerrlinse als Funktion des Gouy-Parameters der Anordnung für verschiedene nichtlineare Phasen zeigt;

Fig. 2b ein Diagramm aus einer Simulation, das den Kerr-Stabilitätsbereich als Funktion des Gouy-Parameters der Anordnung und der nichtlinearen Phase zeigt;

Fig. 2c ein Diagramm aus einer Simulation, das die Änderung der Pumpfrequenz durch die Kerrlinse als Funktion des Gouy-Parameters der Anordnung für verschiedene nichtlineare Phasen zeigt;

Fig. 2d eine numerische Simulation eines nichtlinearen Linsenleiters für verschiedene Phasen pro nichtlinearem Element;

Fig. 3 ein Beispiel für eine Multipass-Zelle, wie sie bei der vorgeschlagenen Anordnung genutzt werden kann;

Fig. 4a-g     verschiedene Anordnungen der Spiegelelemente und des/der nichtlinearen Elemente in einer Multipass-Zelle gemäß der vorgeschlagenen Anordnung; und

Fig. 5a-d     experimentelle Ergebnisse zur Demonstration des vorgeschlagenen Verfahrens zur Pulskompression.

## Wege zur Ausführung der Erfindung

Das vorgeschlagene Verfahren und die damit erzielbaren Vorteile werden nachfolgend nochmals näher erläutert. Hierbei wird zunächst der Einfluss der Kerrlinse unter verschiedenen Bedingungen der Propagation in nichtlinearen Medien diskutiert. Anschließend wird das vorgeschlagene Verfahren erläutert, das die Limitierung durch die Kerrlinse überwindet.

Bei der Propagation eines Pulses mit großer Pulsleistung in einem Medium mit Kerr-Nichtlinearität treten zwei Effekte auf: Durch die zeitliche Änderung der momentanen Intensität $I(t)$ werden neue Frequenzen erzeugt (Selbstphasenmodulation), und das transversale Intensitätsprofil $I(x, y)$ induziert eine Linsenwirkung (Selbstfokussierung). Da die momentane Intensität vom Ort im Strahlprofil abhängt und das Strahlprofil von der Zeit, sind diese Effekte miteinander verknüpft und erfordern im Allgemeinen die (numerische) Lösung der nichtlinearen Schrödinger-Gleichung zur Beschreibung der Propagation. Die getrennte Betrachtung der Effekte kann aber zum Verständnis der Situation beitragen.

Der zeitliche Effekt wird quantifiziert über die nichtlineare Phase $\phi_{NL} = k_0\int\Delta n\cdot dz = k_0\int n_2 I_m\cdot dz$, die bei der Propagation im Medium mit nichtlinearem Brechungsindex $n_2$ aufgesammelt wird. Gemeint ist der Maximalwert der zeitlich variierenden nichtlinearen Phase, also für $P(t) = P_p$. Die maximale zeitliche Änderung der Phase $\partial\partial t\,\phi(t)$ und damit die spektrale Verbreiterung können bei bekannter Pulsform daraus berechnet werden. Für die Intensität ist hier (wie üblich) der über das Strahlprofil mit Strahlradius w gemittelte Wert $I_m = P_p/(\pi w^2)$ mit der Pulsleistung $P_p$ benutzt. In einem Wellenleiter ist der effektive Strahlquerschnitt $A = \pi w^2$ konstant, so dass die nichtlineare Phase geschrieben werden kann als $\phi_{NL} = k_0 n_2 L P_p/A$ (unter der Annahme, dass die Pulsleistung ebenfalls konstant ist). Bei freier Propagation lautet die nichtlineare Phase:

$$\phi_{NL} = k_0 \int n_2 \frac{P_p}{\pi\, w^2}\, dz = \frac{k_0 n_2}{\pi} P_p \int \frac{1}{w^2}\, dz = \frac{k_0 n_2}{\pi} P_p \frac{k_n}{2} \int d\psi = \frac{k_0^2 n_2 n}{2\pi} P_p \cdot \psi = \frac{P_p}{P_{crit}} \cdot \psi \; ,$$

mit der Gouy-Phase $\psi$ und $\partial\psi/\partial z = \partial\partial z \arctan((z - z_0)/z_R) = 2/k_n \cdot 1/w^2$, und $P_{crit}°\lambda_0^2/(2\pi n n_2)$.

Die nichtlineare Phase ist ein Maß für die spektrale Verbreiterung. Eine Phase von $\phi_{NL} < \pi/2$ ergibt noch keine nennenswerte Verbreiterung, während für eine Pulsverkürzung um z.B. den Faktor 3 eines $\mathrm{sech}^2$-förmigen Pulses eine nichtlineare Phase von $\phi_{NL} = 2\pi$ erforderlich ist.

Zur Quantifizierung des räumlichen Einflusses des Kerr-Effekts wird das B-Integral benutzt, das die bei der Propagation durch das nichtlineare Medium auf der Strahlachse aufgesammelte nichtlineare Phase angibt: $B = k_0\int n_2 I_0\cdot dz$. Aufgrund der Definition über die Intensität $I_0$ auf der Strahlachse gilt für einen Gaußschen Strahl $B = 2\phi_{NL}$. Für eine unkritische Beeinflussung des Strahls wird häufig ein Grenzwert $B < \pi$ angegeben, zusätzlich müssen aber je nach Situation weitere Kriterien beachtet werden.

Die Selbstfokussierung durch die Kerrlinse bewirkt eine Veränderung der Strahlkaustik gegenüber der freien Propagation. Im Folgenden soll angenommen werden, dass sich aber die Form des als gaußförmig angenommenen Strahlprofils durch die Aberration der Kerrlinse nicht ändert (tatsächlich ist die Kerrlinse aberrationsbehaftet, da sie statt einer Parabel dem gaußförmigen Intensitätsprofil folgt). Die Brechkraft der Kerrlinse ist $1/f_{Kerr} = 2n_2 P_p/(\pi w^4)d$, mit der Propagationslänge $d$ im Medium. Der hier verwendete Wert für $f_{Kerr}$ minimiert die quadratische Phasenabweichung zu einer aberrationsfreien Linse gewichtet mit der Intensität des Gaußprofils.

Die Propagation um eine infinitesimale Strecke $dz$ im nichtlinearen Medium wird also beschrieben durch die Strahltransfermatrix $M(z) = [[1, n\, dz],[-2n_2 P/(\pi w^4)dz, 1]]$, die vom Strahlradius $w(z)$ abhängt. Daraus folgt für einen Gaußschen Strahl, dessen Taille mit Radius $w_0$ am Beginn des nichtlinearen Mediums liegt: $w^2(z) = w_0^2(1 + (1 - P/P_{crit})z^2/z_{R2})$, $z > 0$, wobei die kritische Leistung für Selbstfokussierung $P_{crit}°\lambda_0^2/(2\pi n n_2)$ eingeführt wurde. Für diesen Wert der Pulsleistung wird die natürliche Divergenz gerade durch die Selbstfokussierung kompensiert. Für größere Werte $P > P_{crit}$ liegt katastrophale Selbstfokussierung vor, d.h. der Strahlradius wird bei der Propagation im nichtlinearen Medium zunehmend kleiner und wird schließlich zu Null. Dieser Selbstfokus liegt im Abstand $z_f = z_R/(P/P_{crit} - 1)^{1/2}$. Der Selbstfokus wird aber nur erreicht und das Medium dadurch zerstört, wenn er innerhalb des nichtlinearen Mediums liegt. Für eine Länge des nichtlinearen Mediums $d < z_f$ kann eine Zerstörung ggf. vermieden werden. Das B-Integral, das im nichtlinearen Medium der Dicke $d$ aufgesammelt wird, lautet dabei: $B = P/P_{crit}\, 2\cdot\arctan(d/z_R(1 - P/P_{crit})^{1/2})/(1 - P/P_{crit})^{1/2}$.

Wenn nicht die Taille am Beginn des nichtlinearen Mediums liegt, lautet der Strahlradius im nichtlinearen Medium: $w^2(z) = w_0^2(1 + (z + z_0)^2/z_{R2} - (P/P_{crit})z^2/z_{R2})$, $z > 0$, mit dem Abstand $z_0$ vom Beginn des nichtlinearen Mediums zur Strahltaille. Das B-Integral kann folglich Werte deutlich größer $\pi$ annehmen (mit einer entsprechenden spektralen Verbreiterung), ohne den Selbstfokus zu erreichen, insbesondere wenn die Pulsleistung größer als die kritische Leistung ist. In einem solchen Fall ist allerdings der Kerr-Effekt sehr stark und die Betrachtung allein der Pulsspitzenleistung unzulässig, d.h. es macht sich bemerkbar, dass die Wirkung der Kerrlinse gemäß der zeitlichen Einhüllenden des Pulses variiert und die spektrale Verbreiterung gemäß dem Strahlprofil. Ein entsprechend verbreiterter Puls ist daher schlecht komprimierbar. Außerdem enthält ein reales Strahlprofil immer leichte Intensitätsmodulationen (oder diese können durch Imperfektionen des Mediums entstehen), die sich durch den Kerr-Effekt aufsteilen und ebenfalls katastrophal fokussiert werden können. Dieser Effekt wird auch Filamentierung genannt. Der Abstand des Selbstfokus für solche Störungen des Strahlprofils ist in der Regel deutlich kleiner als für das gesamte Strahlprofil, und bestimmt daher die Limitierung des B-Integrals bei der Propagation im nichtlinearen Medium auf Werte nicht deutlich größer als $B = \pi$.

Bei der Propagation in einem Wellenleiter von Pulsen mit Pulsleistung kleiner als die kritische Leistung kann das B-Integral große Werte annehmen, ohne dass es zu katastrophaler Selbstfokussierung kommt, d.h. das Kriterium $B < \pi$ gilt nicht. Mit der Pulsleistung kleiner als die kritische Leistung, ist die natürliche Divergenz stärker als die Selbstfokussierung. Weder das Strahlprofil als Ganzes noch Störungen des Profils können sich daher durch den Kerr-Effekt aufsteilen. Ein großes B-Integral kann aber dadurch erreicht werden, dass die Intensität durch die Führung im Wellenleiter über einer langen Propagationsstrecke groß gehalten wird. Da die Selbstfokussierung schwach gegen die Fokussierung des Wellenleiters ist, ist sie und damit auch die Abhängigkeit der Strahlparameter von der Momentanleistung vernachlässigbar. Gleichzeitig wird das Strahlprofil bei der Propagation im Wellenleiter durchgemischt, so dass eine über das Strahlprofil homogene Verbreiterung auftritt. Die spektral verbreiterten Pulse sind daher gut komprimierbar.

Für eine Pulsleistung kleiner als die kritische Leistung des nichtlinearen Mediums kann ein großes B-Integral (d.h. eine große nichtlineare Phase) durch Führung in einem Wellenleiter erreicht werden. Bei Pulsleistungen größer als die kritische Leistung hingegen ist ein großes B-Integral nur erreichbar, wenn der Fokussierung durch die Kerrlinse eine Defokussierung (durch ein Plasma) entgegenwirkt. Die Erzeugung eines Plasmas geht aber mit Verlusten einher und ist für große mittlere Leistungen nicht geeignet. Ein B-Integral in der Größenordnung $2\pi$ ist bei großer Pulsleistung auch in freier Propagation erreichbar, ergibt aber keinen gut komprimierbaren Puls.

Die vorliegende Erfindung beruht auf der Tatsache, dass beim Übergang von der spektralen Verbreiterung in einem Wellenleiter zur spektralen Verbreiterung in einem Linsenleiter die Limitierung der Pulsleistung auf Werte kleiner als die kritische Leistung des nichtlinearen Mediums überwunden wird. Damit können Pulse mit großer Pulsleistung komprimiert werden. Bei geeigneter Wahl der Parameter des Linsenleiters wird eine gute Komprimierbarkeit der Pulse und Unempfindlich gegenüber Variation der Strahllage, der Strahlparameter (q-Parameter) und des Strahlprofils erreicht.

Damit ein durch Selbstphasenmodulation spektral verbreiterter Puls auf eine kleinere Pulsdauer komprimierbar ist, muss das Spektrum über dem Strahlprofil homogen verbreitert sein. Nach allgemeiner Auffassung ist das nur durch spektrale Verbreiterung in einem Wellenleiter (Faser oder Hohlleiter) möglich, während die spektrale Verbreiterung bei freier Propagation notwendigerweise am Rand des Strahlprofils schwächer ist als auf der Strahlachse. Wir legen im Folgenden dar, dass dies nicht notwendigerweise der Fall ist.

Die spektrale Verbreiterung wird dadurch erzeugt, dass dem Puls eine zeitlich variierende Phase aufgeprägt wird, die hier durch den zeitlichen Pulsverlauf selbst bestimmt ist (Selbstphasenmodulation). Welche nichtlineare Phasenverschiebung zu einem Zeitpunkt t mit Momentanleistung $P(t)$ erzeugt wird, ist zunächst nicht offensichtlich, da die nichtlineare Phase auch räumlich gemäß dem Intensitätsprofil $I(x,y)$ variiert. Die daraus resultierende (und zeitlich variierende) Kerrlinse führt dazu, dass nicht nur die Phase zeitlich über dem Puls variiert, sondern auch die Strahlparameter. Wenn die Strahlparameter stark variieren und die zeitlichen Anteile des Pulses nicht vollständig räumlich überlappen, ist der Puls nicht vollständig komprimierbar. In einem Wellenleiter ist die Wirkung der Kerrlinse und damit die Variation der Strahlparameter bei nicht zu großer Momentanleistung aber schwach, der Puls daher gut komprimierbar. Das Gleiche kann nun aber auch für eine Anordnung mit freier Propagation gelten: Solange die zeitliche Variation der Strahlparameter, d.h. die Variation mit der Momentanleistung, klein ist, ist der Puls komprimierbar. Dann ist auch das Spektrum über dem Profil homogen verbreitert. Eine inhomogene Verbreiterung würde ansonsten für einige spektrale Anteile abweichende Strahlparameter bedeuten. Die schwache Variation der Strahlparameter kann bei freier Propagation auch für große Pulsleistungen erreicht werden durch die Aufteilung der nichtlinearen Phase auf hinreichend kleine Pakete im nichtlinearen Medium und geeignete Kombination mit Propagation ohne nichtlineares Medium.

Für die Propagation in einem nichtlinearen Medium gilt allgemein, dass die aufgesammelte nichtlineare Phase verknüpft ist mit der aufgesammelten Gouy-Phase gemäß $\phi_{NL} = (P/P_{crit}) \cdot \psi$, da beide durch das Integral über den inversen Strahlquerschnitt bestimmt sind. Dies gilt daher unabhängig davon, ob die Propagation frei oder geführt ist. In beiden Fällen wird der Strahlradius durch die Wirkung der Kerrlinse verändert, falls nicht $P \ll P_{crit}$ gilt. In einem Wellenleiter wird die Eigenmode des Wellenleiters, d.h. die Mode, die bei Propagation erhalten bleibt, durch die zusätzliche Wirkung der Kerrlinse verändert. Dabei ist das Verhältnis der Fokussierung durch die Kerrlinse und der Fokussierung durch den Wellenleiter durch das Verhältnis von Momentanleistung und kritischer Leistung $P/P_{crit}$ bestimmt. Der Strahldurchmesser der Eigenmode wird durch die zusätzliche Fokussierung der Kerrlinse verkleinert. Damit der Einfluss der Kerrlinse auf die Eigenmode nicht zu groß ist, muss ca. $P < 0.5 \cdot P_{crit}$ gelten. Für Leistungen $P > P_{crit}$ ist die Brechkraft der Kerrlinse zu stark und es existiert keine Eigenmode mehr.

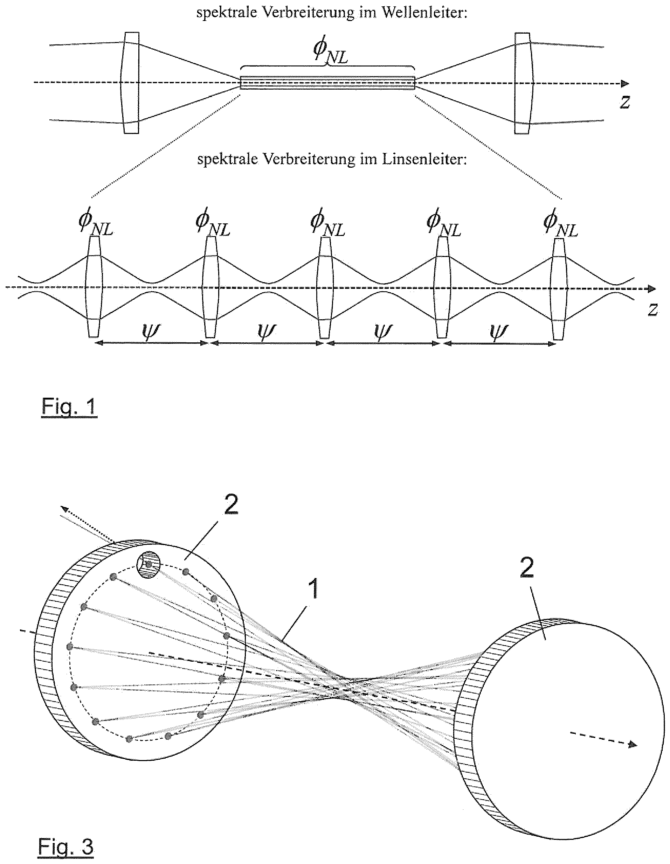

Um diese Limitierung der Pulsleistung zu überwinden, kann von einem Wellenleiter zu einem Linsenleiter übergegangen werden, d.h. die Fokussierung wird nicht mehr kontinuierlich entlang des Wellenleiters aufgeprägt, sondern diskret in Linsen. Figur 1 zeigt hierzu schematisch den Übergang vom Wellenleiter zum Linsenleiter für die spektrale Verbreiterung. Die nichtlineare Phase $\phi_{NL}$ wird dann beim Durchgang durch die Linsen aufgesammelt und die Gouy-Phase $\psi$ bei der Propagation zwischen den Linsen. Sie werden also nicht mehr kontinuierlich wie bei der Propagation im Wellenleiter aufgesammelt, sondern stellen diskrete Parameter dar. Die Gouy-Phase, die den Linsenleiter charakterisiert, wird daher in der vorliegenden Patentanmeldung als Gouy-Parameter bezeichnet. Im Linsenleiter sind im Gegensatz zum Wellenleiter die nichtlineare Phase $\phi_{NL}$ und der Gouy-Parameter $\psi$ entkoppelt, d.h. sie sind nicht mehr fest durch $P/P_{crit}$ miteinander verbunden. Die nichtlineare Phase kann über die Dicke der Linse unabhängig vom Gouy-Parameter gewählt werden, der durch Brechkraft und Abstand der Linsen eingestellt wird. Dadurch sind Werte $P > P_{crit}$ möglich. Die Situation kann auch so aufgefasst werden, dass durch die Kombination von Linsen (als nichtlineares Medium) mit Luft (mit vernachlässigbarer Nichtlinearität) der effektive nichtlineare Brechungsindex verringert und damit die kritische Leistung vergrößert wird. Im Folgenden definieren wir $\phi_{NL}$ als die nichtlineare Phase pro Durchgang durch das nichtlineare Medium. Die insgesamt aufgesammelte nichtlineare Phase ist dann $\sum\phi_{NL} = N\cdot\phi_{NL}$ mit der Zahl der Durchgänge N.

Wenn der Linsenleiter aus gleichartigen Abschnitten besteht, ist er charakterisiert durch die Brennweite $f$ der Linsen und deren Abstand $L$. Stattdessen kann auch der Strahlradius $w$ der Eigenmode am Ort der Linse und der Gouy-Parameter $\psi$, d.h. die Gouy-Phase, die die Eigenmode (Grundmode) bei der Propagation zwischen den Linsen aufsammelt, zur Beschreibung benutzt werden, wobei der Gouy-Parameter Werte $0\leq\psi\leq\pi$ annehmen kann. Dies wird als der Stabilitätsbereich des Linsenleiters bezeichnet.

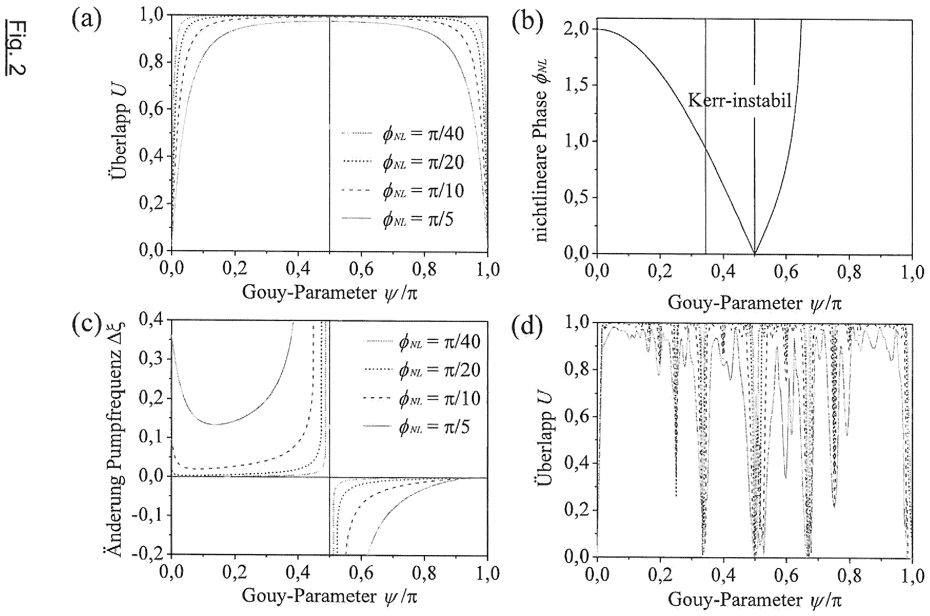

Durch die Wirkung der Kerrlinse verändert sich die Eigenmode und wird damit abhängig von der Momentanleistung des Pulses. Die Änderung der Eigenmode kann auch unabhängig von der konkreten Anordnung (gegeben durch Linsen, Spiegel und Abstände) beschrieben werden als Funktion der im nichtlinearen Element aufgesammelten Phase $\phi_{NL}$ und des Gouy-Parameters $\psi$ für die Propagation zwischen den nichtlinearen Elementen. Eine Analyse ergibt, dass die Änderung der Eigenmode an den Rändern des Stabilitätsbereichs besonders stark ist. Diese Änderung kann durch den Überlapp $U$ der Eigenmode mit und ohne Kerrlinse quantifiziert werden (siehe Fig. 2a). Aufgrund der starken Änderung der Eigenmode mit der Kerrlinse ist eine Anordnung ungeeignet, die sehr nahe an einem der Stabilitätsränder liegt. Zum einen bedeutet eine starke Variation der Eigenmode mit der Leistung, dass nicht der gesamte Puls mit seinem zeitlichen Leistungsverlauf modenangepasst sein kann. Zum anderen ist die Änderung der Verhältnisse bei einer Schwankung der Pulsleistung besonders groß.

In der Mitte des Stabilitätsbereichs ändert sich zwar die Eigenmode durch die Kerrlinse kaum, dort tritt aber ein Bereich auf, der instabil ist gegen Abweichungen von der Eigenmode. Wenn somit ein Strahl durch die Anordnung läuft, dessen Strahlparameter von der Eigenmode abweichen, wird diese Abweichung zunehmend größer. Diesen Bereich nennen wir "Kerr-instabil". Er liegt in der Mitte des Stabilitätsbereichs (um $\psi = \pi/2$) und wird mit der nichtlinearen Phase breiter (siehe Fig. 2b).

Auch außerhalb dieses Kerr-instabilen Bereichs wirkt sich die Kerrlinse auf Abweichungen von der Eigenmode aus. Solche Abweichungen "pumpen" beim Durchlaufen der Anordnung, d.h. der Strahldurchmesser ändert sich periodisch beim Durchlaufen der Anordnung, mit dem Strahlradius der Eigenmode als Mittelwert. Eine Analyse zeigt, dass die Frequenz dieses Pumpens durch die Kerrlinse verändert wird. Daher entwickeln sich Abweichungen von der Eigenmode (die z.B. durch imperfekte Modenanpassung des Eingangsstrahls gegeben sind) beim Durchlaufen der Anordnung für verschiedene Momentanleistungen unterschiedlich, da die Kerrlinse und damit die Pumpfrequenz davon abhängt. Das führt zu einer Variation der Strahlparameter über dem zeitlichen Verlauf des Pulses und damit einer verringerten Komprimierbarkeit. Die Änderung der Pumpfrequenz ist am oberen Rand des Stabilitätsbereichs am kleinsten (siehe Fig. 2c).

Außerdem sind die Aberrationen der Kerrlinse zu beachten, die für ausgezeichnete Werte des Gouy-Parameters zur resonanten Kopplung in höhere transversale Moden führen. Zu vermeiden sind daher Gouy-Parameter $\psi = n/p\cdot\pi$ mit Modenordnung $p$ und $n = 1,...,p - 1$. Im Stabilitätsbereich der Anordnung werden dadurch Werte ausgeschlossen, abhängig von der Stärke der Aberration und der Zahl der Durchgänge, d.h. abhängig von der nichtlinearen Phase $\phi_{NL}$ und der Gesamtphase $\sum\phi_{NL}$. Große Leistungsanteile in höheren transversalen Moden ergeben sich auch bei kleiner nichtlinearer Phase $\phi_{NL} = \pi/40$ und nicht sehr großer Gesamtphase $\sum\phi_{NL}=2\pi$ bei den Werten $\psi = \pi/2$, $\psi = \pi/3$, $2\pi/3$, $\psi = \pi/4$, $3\pi/4$ und $\psi = \pi/5$, $2\pi/5$, $3\pi/5$, $4\pi/5$ (siehe Fig. 2d). Für größere nichtlineare Phasen und größere Gesamtphasen werden diese Resonanzen stärker und es treten weitere Resonanzen hinzu.

Anhand der oben diskutierten Eigenschaften des nichtlinearen Linsenleiters können vorteilhafte Bereiche der Parameter Gouy-Parameter $\psi$ und nichtlineare Phase $\phi_{NL}$ angegeben werden, die eine gute Komprimierbarkeit der spektral verbreiterten Pulse erlauben und dabei unempfindlich sind gegen Schwankungen der Pulsleistung, der Eingangsparameter und des Strahlprofils. Die Abhängigkeiten, die dazu berücksichtigt werden müssen, sind:

- Überlapp der Eigenmoden für verschiedene Momentanleistungen

- Stabilität gegenüber Abweichung von der Eigenmode und Änderung der Pumpfrequenz mit der Momentanleistung
- Aberrationen der Kerrlinse und resonante Kopplung in höhere Moden

Alle Abhängigkeiten sprechen für eine möglichst kleine nichtlineare Phase $\phi_{NL}$ pro Durchgang. Da für die spektrale Verbreiterung eine bestimmte Gesamtphase $\Sigma\phi_{NL}$ erreichen werden muss, ist aber eine möglichst große nichtlineare Phase $\phi_{NL}$ pro Durchgang vorteilhaft, da mit der Zahl der Durchgänge $N$ der Aufwand des optischen Systems steigt und bei einer großen Zahl von optischen Elementen die Verluste an den optischen Flächen ggf. erheblich werden (AR- und HR-Beschichtungen). Welche nichtlineare Phase pro Durchgang möglich ist, ist abhängig vom Gouy-Parameter $\psi$ und von der Gesamtphase $\Sigma\phi_{NL}$. Die verschiedenen Abhängigkeiten ergeben dazu gegenläufige Aussagen, so dass ein Ausgleich gefunden werden muss.

Die Änderung der Eigenmode mit der Momentanleistung ist an den Stabilitätsrändern am größten. Die Anordnung darf daher nicht zu nah an einem der Stabilitätsränder betrieben werden. Um die Stabilitätsmitte ($\psi = \pi/2$) ist die Anordnung instabil gegenüber Abweichungen von der Eigenmode. Dieser Bereich muss daher vermieden werden. Die Änderung der Pumpfrequenz mit der Momentanleistung ist um die Stabilitätsmitte am stärksten und wird nur bei Annäherung an den oberen Stabilitätsrand ($\psi = \pi$) klein. Aus diesen beiden Überlegungen folgt als vorteilhaft ein Bereich, der nahe am oberen Stabilitätsrand liegt, aber nicht so nahe, dass die Änderung der Eigenmode mit der Momentanleistung zu groß wird, d.h. ca. $\psi = 0,9\pi$. Dieser Bereich ergibt sich auch aus der Betrachtung der Resonanzen von höheren transversalen Moden. Dabei sollte die nichtlineare Phase $\phi_{NL}$ pro Durchgang nicht größer als ca. $\pi/10$ sein. Für größere Gesamtphasen ($\Sigma\phi_{NL} > 4\pi$) sollte dieser Wert noch kleiner sein.

Für die Auslegung eines konkreten Systems müssen ggf. weitere Kriterien beachtet werden, z.B. Zerstörschwellen, Baulängen, Dispersionskompensation und thermische Linse.

Bisher wurde der Fall eines regelmäßigen Linsenleiters betrachtet, also eine Anordnung aus gleichen Abschnitten mit Gouy-Parameter $\psi$. Es ist auch möglich, eine Anordnung zu verwenden, die aus unterschiedlichen Abschnitten besteht, so dass der Gouy-Parameter für die Propagation zwischen den nichtlinearen Elementen unterschiedlich ist. Für einen Linsenleiter bedeutet das unterschiedliche Abstände und/oder Brennweiten der Linsen. Die Zuordnung einer Eigenmode und eines Gouy-Parameters beruht zunächst auf einem regelmäßigen Linsenleiter. Die Eigenmode (Grundmode) ist dann diejenige Mode, die nach einem Durchgang reproduziert wird, und der Gouy-Parameter diejenige Gouy-Phase, die diese Mode dabei aufsammelt. Eine Zuordnung ist auch dann möglich, wenn die Anordnung nicht regelmäßig ist, sondern aus unterschiedlichen Abschnitten besteht, solange die Anordnung eine Periodizität aufweist, ggf. erst nach mehreren Durchgängen durch ein nichtlineares Element. Die Eigenmode ist dann diejenige Mode, die reproduziert wird, nachdem die Anordnung soweit durchlaufen ist, bis sich ein Abschnitt wiederholt. Dabei können unterschiedliche Gouy-Phasen zwischen den nichtlinearen Elementen innerhalb des Abschnitts aufgesammelt werden. Die Anordnung wird dann entsprechend durch mehrere Gouy-Parameter beschrieben. Darüber hinaus kann ein Gouy-Parameter als das (arithmetische) Mittel dieser Gouy-Parameter angegeben werden, der dann die Bedingung gemäß Patentanspruch 1 erfüllen sollte.

Neben einer rotationssymmetrischen Anordnung kann auch eine Anordnung mit einem elliptischen und/oder astigmatischen Strahl genutzt werden. Wenn der Strahlradius am Ort des nichtlinearen Elements in den beiden transversalen Richtungen unterschiedlich ist, hat auch die Kerrlinse in diesen Richtungen eine unterschiedliche Brechkraft. Die Wirkung dieser Brechkraft kann aber für beide Richtungen mit dem gleichen Parameter $\phi_{NL}$ beschrieben werden, da er für beide Richtungen die Phasenverschiebung zwischen Strahlachse und Rand des Strahls beschreibt. Eine Anordnung kann so ausgelegt werden, dass sie in den beiden transversalen Richtungen einen unterschiedlichen Gouy-Parameter besitzt.

Die vorgeschlagene optische Anordnung für die Durchführung des Verfahrens kann einfach und kompakt in Form einer Multipass-Zelle realisiert werden, wie sie beispielhaft in Figur 3 dargestellt ist. Hierfür werden vorzugsweise ein oder mehrere dünne nichtlineares Elemente (nichtlineares Medium) in eine Spiegelanordnung eingebracht, in der der eingekoppelte Laserstrahl 1 mit den Laserpulsen zwischen zwei äußeren Spiegelelementen 2 bzw. Spiegeln mehrfach hin- und her reflektiert wird. Eine derartige Spiegelanordnung kann selbstverständlich auch durch Linsen oder weitere Spiegel ergänzt werden.

In einer Multipass-Zelle können mehrere Reflexe auf den Spiegeln entlang eines Kreises (oder einer Ellipse) um die optische Achse angeordnet werden, wobei ein Reflex auf dem Kreis um den Winkel $\psi$, gegenüber dem vorherigen weitergelaufen ist. $\psi$ ist identisch mit dem Gouy-Parameter für einen vollständigen Umlauf in der Zelle. Wenn sich ein nichtlineares Element zwischen den Spiegeln befindet, oder wenn beide Spiegel der Zelle als nichtlineares Element dienen, ist der Gouy-Parameter für die Propagation zwischen den nichtlinearen Elementen gerade halb so groß. Ein Muster mit äquidistanten Reflexen auf den Spiegeln ergibt sich also für Gouy-Parameter $\psi = K/N \cdot 2\pi$, mit natürlichen Zahlen $K$, $N$, die teilerfremd sein müssen. Dabei gibt $N$ die Zahl der Reflexe auf dem Kreis an und $K$, um wie viele Positionen der Strahl von einem Umlauf zum nächsten weiterwandert. Nach $N$ Umläufen, also einem vollen Umlauf auf dem Kreis, erreicht der Strahl wieder die Ausgangsposition, d.h. es liegt eine Abbildung vor. Der Gouy-Parameter ist dann ein Vielfaches von $2\pi$. Das heißt auch, dass (ohne Kerrlinse) der q-Parameter reproduziert wird, unabhängig vom einfallenden q-Parameter.

Die Bedingung $\psi = K/N \cdot 2\pi$ steht auf den ersten Blick im Widerspruch zu der Forderung, Resonanzen von höheren Moden durch Aberrationen der Kerrlinse bei ausgezeichneten Gouy-Parametern zu vermeiden. Die Resonanzen sind aber am stärksten für kleine Werte von $N$, und für eine ausreichende spektrale Verbreiterung ist eine größere Zahl an Umläufen erforderlich. Für einen Wert des Gouy-Parameters zwischen den nichtlinearen Elementen wie $\psi = 16/19\pi$ ist für eine nicht zu große nichtlineare Phase pro Element $\phi_{NL}$ keine Resonanz zu erwarten.

Die Multipass-Zelle der Figur 3 stellt eine kompakte Ausführung eines Linsenleiters dar, die zur nichtlinearen Pulskompression benutzt werden kann. In dem gezeichneten Fall ist der Gouy-Parameter für einen Umlauf $\psi = 12/13 \cdot 2\pi$, der Gouy-Parameter für die Propagation von einem Spiegel zum nächsten also $\psi = 12/13\,\pi$. Die Ein- und Auskopplung aus der Zelle erfolgt hier über ein Loch im Spiegel.

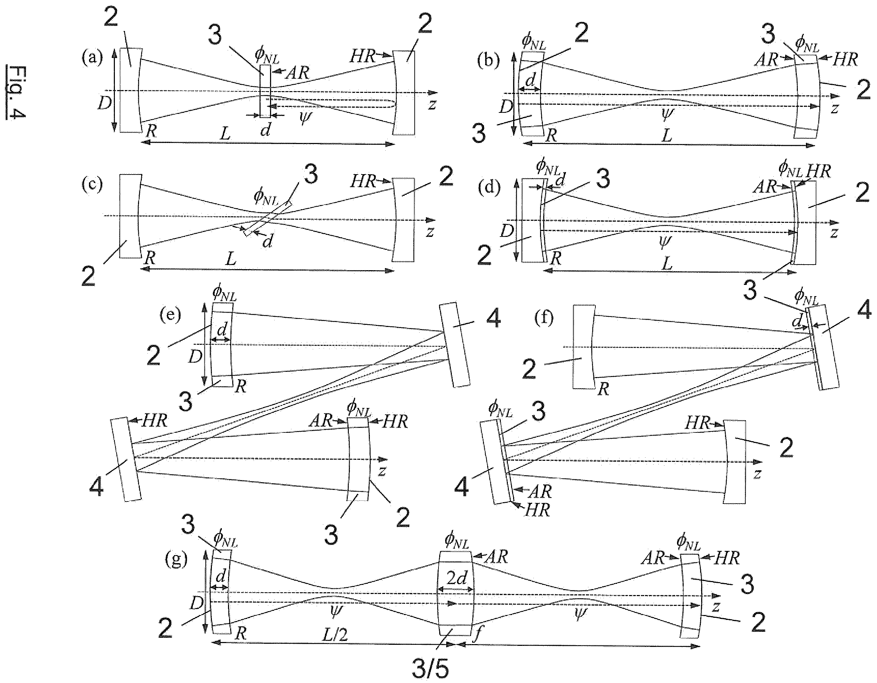

Bei einer derartigen Multipass-Zelle können im einfachsten Fall auch die Spiegelelemente 2 der Zelle selbst als nichtlineares Medium dienen. Sie werden hierzu auf der Vorderseite mit einer Antireflex (AR)-Beschichtung und auf der Rückseite mit einer hoch reflektierenden (HR) Beschichtung versehen. Figur 4 zeigt verschiedene vorteilhafte Ausführungen einer derartigen Multipass-Zelle, wie sie in der vorgeschlagenen Anordnung verwendet werden können. Bei der Ausgestaltung der Figur 4a besteht die Multipass-Zelle aus zwei Spiegelelementen 2 mit Krümmungsradius $R$ im Abstand $L$. Zwischen den beiden Spiegelelementen 2 ist ein nichtlineares optisches Element 3 aus dielektrischem Material angeordnet. Die Dicke $d$ dieses Elementes 3 ist so gewählt, dass die Eigenmode (Grundmode) dieser Anordnung beim Durchgang durch das Element 3 die nichtlineare Phase $\phi_{NL}$ aufsammelt. Ist das nichtlineare optische Element 3 nicht wie in der Abbildung in der Mitte der Zelle angeordnet und/oder die Zelle nicht symmetrisch, so wird zwischen den Durchgängen durch das nichtlineare optische Element 3 abwechselnd eine unterschiedliche Gouy-Phase aufgesammelt.

Figur 4b zeigt eine Ausgestaltung, bei der die Spiegelsubstrate der beiden Spiegelelemente 2 als nichtlineare optische Elemente 3 genutzt werden. Die Spiegelelemente sind dazu auf der Vorderseite AR- und auf der Rückseite HR-beschichtet. Die Spiegelelemente 2 weisen wiederum den Krümmungsradius $R$ auf und sind im Abstand $L$ zueinander angeordnet. Die Dicke $d$ der Spiegelsubstrate ist so gewählt, dass die Eigenmode beim doppelten Durchlaufen die Phase $\phi_{NL}$ aufsammelt.

Figur 4c zeigt eine Ausgestaltung der Anordnung, die sich von der Anordnung der Figur 4a nur dadurch unterscheidet, dass das nichtlineare optische Element 3 unter dem Brewster-Winkel zwischen den Spiegelelementen 2 angeordnet ist, um kleine Reflexionsverluste auch ohne AR-Beschichtungen zu erreichen.

Die Multipass-Zelle der Figur 4d ist ähnlich der Multipass-Zelle der Figur 4b aufgebaut. In dieser Ausgestaltung dient jedoch nicht das Spiegelsubstrat des jeweiligen Spiegelelementes 2 als nichtlineares Medium, sondern ein auf die Vorderseite des Spiegelelementes 2 aufgebrachtes dünnes optisches Element 3. Diese dünnen nichtlinearen optischen Elemente 3 können angesprengt, aufgeklebt, epitaktisch aufgebracht oder in anderer Weise am Spiegelelement befestigt sein.

Figur 4f zeigt eine Ausgestaltung, bei der ein derartiges dünnes nichtlineares optisches Element 3 auf Planspiegeln 4 aufgebracht wird, die zusätzlich als Faltungsspiegel in den Strahlengang der Anordnung eingebracht sind.

Figur 4e zeigt eine Ausgestaltung, bei der eine Anordnung wie die der Figur 4b durch Hinzunahme von Planspiegeln 4 gefaltet wird, um die Baulänge zu reduzieren. Der kleine Strahlradius auf den Planspiegeln 4 ist aufgrund der größeren Zerstörschwelle von HR- gegenüber AR-Beschichtungen möglich. Die zusätzliche Reflexion an den Planspiegeln 4 kann auch zum Dispersionsmanagement genutzt werden.

Figur 4g zeigt schließlich eine Ausgestaltung, bei der durch Hinzunahme einer Linse 5 (oder auch mehrerer Linsen) als weiteres nichtlineares Element 3 in der Zelle weniger optische Flächen mit entsprechenden Verlusten pro nichtlinearem Element auftreten. Die Anordnung muss dabei nicht zwangsläufig symmetrisch aufgebaut sein. Die Andeutung des Strahlverlaufs in den Teilabbildungen der Figur 4 sollen dabei nicht die Eigenmoden der Zellen, sondern die Strahlenbündel repräsentieren, die sich beim Durchlaufen der Zellen ergeben.

Die Zahl der Umläufe in der Multipass-Zelle kann über geeignete Anordnungen vergrößert werden (Robert-Zelle; mehrfache Ellipsen in einer Multipass-Zelle z.B. mittels eines Stör-Spiegels). Die Anordnung kann auf ein zweistufiges Kompressions-Schema (oder mehr Stufen) erweitert werden, d.h. nach einer ersten spektralen Verbreiterung werden die Pulse komprimiert, bevor sie in einer zweiten Stufe erneut spektral verbreitert werden. Ein solches Schema bietet bei der spektralen Verbreiterung in einer Faser den Vorteil, dass für eine bestimmte nichtlineare Phase (und damit Kompressionsfaktor) in der zweiten Stufe eine kürzere Propagationslänge in der Faser ausreicht und damit weniger Dispersion aufgesammelt wird, die bei der Kompression auf sehr kleine Pulsdauern limitierend ist. Für die hier vorgeschlagene Anordnung kommt ein weiterer Vorteil hinzu. Wenn in der zweiten Stufe ein kürzerer Puls durch die Anordnung läuft, ist das Verhältnis aus der Pulsleistung, die die Stärke der Kerrlinse bestimmt, und der zeitlichen Ableitung der Momentanleistung, die die spektrale Verbreiterung bestimmt, günstiger. Bei einer durch den Einfluss der Kerrlinse limitierten Gesamtphase $\Sigma\phi_{NL}$ kann somit eine größere spektrale Verbreiterung und damit kürzere Pulse erreicht werden.

Die Anordnung kann auch mit einem DPC-Schema (divided pulse compression) kombiniert werden.

Die vorgeschlagene Anordnung zur nichtlinearen Kompression durch den Übergang vom Wellenleiter zum Linsenleiter überwindet die Begrenzung der Pulsleistung auf Werte kleiner als die kritische Leistung für Selbstfokussierung $P_{crit}$ (d.h. Begrenzung der Pulsenergie auf Werte kleiner $E_{crit}=P_{crit}\cdot\tau$. Die Begrenzung aufgrund des Kerr-Effekts bezieht sich hier stattdessen auf die nichtlineare Phase pro nichtlinearem Element $\phi_{NL}$ und die nichtlineare Gesamtphase $\Sigma\phi_{NL}$, wie oben beschrieben wurde.

In der vorgeschlagenen Anordnung aus einem oder mehreren dielektrischen nichtlinearen Elementen können Pulse mit Pulsleistungen im Bereich von ca. 12 MW bis 2 GW komprimiert werden. Bei einer Pulsdauer von bspw. 800 fs entspricht das Energien im Bereich von ca. 12 $\mu$J bis 2 mJ.

Eine Limitierung der Pulsenergie nach unten ergibt sich daraus, dass der Strahl nicht beliebig klein in das nichtlineare Medium fokussiert werden kann, ohne dass es zu Selbstfokussierung kommt. Die Rayleighlänge des fokussierten Strahls muss groß sein gegen die Dicke $d$ des nichtlinearen Elements: $d<<z_R=A/\lambda_n$ mit der Querschnittsfläche $A$ und Wellenlänge $\lambda_n$ des Strahls (im Medium). Daraus folgt mit der nichtlinearen Phase $\phi_{NL}=k\cdot n_2\cdot P/A\cdot d$ für die Pulsleistung $P=\phi_{NL}\cdot A/(k\cdot n_2\cdot d) >> \phi_{NL}\cdot\lambda_n/(k\cdot n_2) = \phi_{NL}\cdot P_{crit}$. Wenn die nichtlineare Phase ca. $\phi_{NL} = \pi/10$ betragen soll, bedeutet das ca. $P>_3\cdot P_{crit}$. Die minimale Pulsleistung ist also um eine knappe Größenordnung größer als die maximale Leistung bei der spektralen Verbreiterung in einem Wellenleiter (Faser). Für Quarzglas mit $P_{crit} = 4$ MW ist das eine minimale Pulsleistung von 12 MW.

Die Pulsleistung ist nach oben begrenzt durch die Zerstörschwelle des nichtlinearen Mediums (bzw. seiner Beschichtung) zusammen mit einer Begrenzung der Querschnittsfläche des Strahls, die durch die Abmessungen der Anordnung gegeben ist. Zusätzlich zur Zerstörschwelle ergibt sich eine Limitierung der Fluenz durch die Begrenzung der Dicke $d$ des nichtlinearen Mediums: Für einen mechanisch und thermisch stabilen Aufbau darf sie nicht zu klein sein. Dies gilt insbesondere bei großen mittleren Leistungen. Wenn z.B. für die Dicke $d > 5$ mm gelten soll, folgt mit $\tau = 800$ fs, $\lambda = 1$ $\mu$m, Quarzglas und einer nichtlinearen Phase $\phi_{NL} = \pi/10$ für die Fluenz $F = \phi_{NL}\cdot\tau/(k\cdot n_2\cdot d) < 30$ mJ/cm$^2$. Das ist in diesem Fall weniger als die Zerstörschwelle (ca. 1 J/cm$^2$) und stellt daher die Limitierung der Fluenz dar. Wenn das nichtlineare Element bei einem Durchgang doppelt durchlaufen wird wie in Fig. 4b, ist jeweils $d$ durch $2d$ zu ersetzen.

Eine Einschränkung der Pulsenergie nach oben ergibt sich daraus zusammen mit einer Begrenzung der Abmessungen. Eine große Querschnittsfläche erfordert einen großen Abstand $L$ der nichtlinearen Elemente und die Einstellung nah am oberen oder unteren Stabilitätsrand, d.h. einen Gouy-Parameter $\psi$ nahe 0 oder $\pi$. Da die Änderung der Eigenmode mit der Kerrlinse nah an den Stabilitätsrändern sehr groß wird (siehe Fig. 2a), kann die Anordnung nicht beliebig nah am Stabilitätsrand eingestellt werden. Für einen symmetrischen Aufbau (siehe Fig. 2b) ist $A = \pi w^2 = L\cdot\lambda/\sin(\psi)$. Mit einem maximalen Gouy-Parameter von z.B. $\psi = 18/19\pi$ und einem noch handhabbaren Abstand $L = 1$ m ist $A = 0,06$ cm$^2$ für $\lambda = 1$ $\mu$m. Die Pulsleistung ist damit begrenzt auf <2 GW (Pulsenergie 2 mJ).

Um an die Limitierung durch die Zerstörschwelle der Spiegel heranzukommen, können nichtlineare Elemente mit einer kleineren Dicke $d$ oder mit einer kleineren Nichtlinearität benutzt werden. Ersteres ist bspw. dadurch erreichbar, dass ein dünnes nichtlineares Element auf einen Spiegel aufgebracht wird (siehe Fig. 4d). Letzteres bspw. durch die Verwendung eines Gases statt eines dielektrischen Mediums.

Die Limitierung der Pulsleistung ist dann durch die Zerstörschwelle der Spiegel gegeben. Eine Zerstörschwelle von ca. 1 J/cm$^2$ bei einer Pulsdauer von 800 fs erlaubt mit einem Sicherheitsfaktor eine Fluenz von ca. 300 mJ/cm$^2$. Zusammen mit der oben angegebenen Limitierung in der Querschnittsfläche entspricht das einer Pulsleistung von 20 GW (Pulsenergie 20 mJ).

Wenn ein Gas als nichtlineares Medium benutzt wird, kann die Nichtlinearität eingestellt werden, was eine Flexibilität bzgl. Änderung der Pulsenergie ergibt. Dies kann über den Gasdruck oder über das Mischungsverhältnis zwei Gase erfolgen. Bspw. können die Gase Neon (0,74·10$^{-20}$ cm$^2$/W/bar) und Argon (9,8·10$^{-20}$ cm$^2$/W/bar) kombiniert werden. Bei Atmosphärendruck ist über die Variation der Partialdrücke der nichtlineare Brechungsindex in einem Bereich von 0,74 bis 9,8·10$^{-20}$ cm$^2$/W einstellbar.

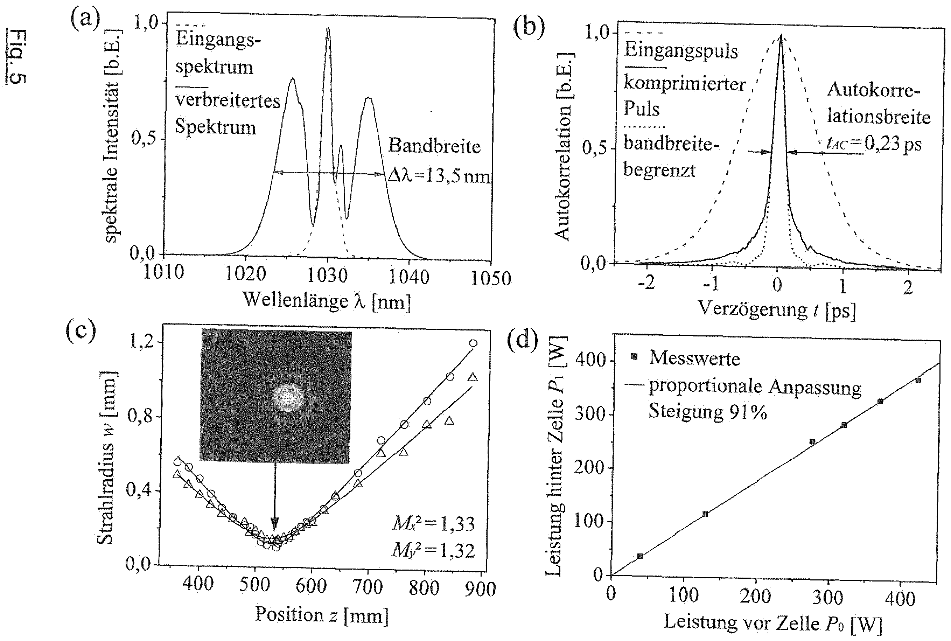

Das neuartige Verfahren zur nichtlinearen Pulskompression wurde experimentell demonstriert. Pulse mit $\tau = 0,88$ ps Pulsdauer und $E = 42$ $\mu$J Pulsenergie bei $v_{rep} = 10$ MHz Repetitionsrate ($P_m = 420$ W mittlere Leistung) wurden mit einer Multipass-Zelle (Gouy-Parameter $\psi = 16/19\pi$, 38 Durchgänge durch ein nichtlineares Element aus Quarzglas) spektral verbreitert und anschließend mit gechirpten Spiegeln komprimiert (3 Reflexe mit ca. GDD = -10 000 fs$^2$). Die Autokorrelationsbreite nach Kompression beträgt $t_{AC} = 0,23$ ps. Das entspricht einer Pulsdauer von ca. $\tau = 0,17$ ps und damit einem Kompressionsfaktor von 5. Die komprimierte Leistung ist $P_m = 375$ W, entsprechend $E = 37,5$ $\mu$J Pulsenergie. Die Strahlqualität wird in der Anordnung erhalten und beträgt hinter der Zelle M$^2$ = 1,33 x 1,32. Fig. 5 stellt die experimentellen Ergebnisse dar. Fig. 5a zeigt hierbei das Spektrum nach Verbreiterung zusammen mit dem Eingangsspektrum, Fig. 5b die gemessene Autokorrelation nach Kompression zusammen mit der Autokorrelation des Eingangspulses und der berechneten Autokorrelation, die sich für einen bandbreitebegrenzten Puls zum verbreiterten Spektrum ergibt, Fig. 5c die Strahlkaustik nach Kompression zusammen mit dem Strahlprofil in der Taille, und Fig. 5d die durch die Zelle transmittierte Leistung für verschiedene einfallende Leistungen.

Die Pulsleistung des einfallenden Pulses liegt mit $P_p = 42$ MW deutlich über der kritischen Leistung des nichtlinearen Mediums ($P_{crit} = 4$ MW). Die durch die Zelle transmittierte Leistung steigt in guter Näherung proportional mit der einfallenden Leistung (Fig. 5d), d.h. die Transmission ist unabhängig von der Leistung und von der nichtlinearen Phase. Die Transmission von $T = 91\%$ kann mit den Reflexionsverlusten der Spiegel erklärt werden (HR > 99,95%, AR < 0,1%).

Die vorgeschlagene Anordnung zur nichtlinearen Pulskompression ist unempfindlich gegenüber Schwankungen der Pulsleistung, der Strahllage und der Strahlparameter. Sie reagiert gutmütig auf Störungen des Strahlprofils, d.h. der Strahl und die spektrale Verbreiterung werden nicht negativ beeinflusst. Insbesondere werden Intensitätsrippel auf dem Profil nicht aufgesteilt. Die Anordnung kommt ohne eine Dämpfung der Strahldurchmesseränderung aufgrund der Kerrlinse durch Blenden, ein Plasma o.ä. aus und weist eine große Transmission auf. Die Anordnung ist daher in besonderer Weise geeignet, Pulse mit großer mittlerer Leistung zu komprimieren. Das Verfahren ist nicht auf Pulsleistungen kleiner als die kritische Leistung von Dielektrika limitiert und ist daher für einen Pulsenergiebereich geeignet, der durch spektrale Verbreiterung in Glasfasern nicht erreichbar ist.

Bezugszeichenliste

1    Laserstrahl
2    Spiegelelement
3    nichtlineares optisches Element
4    Planspiegel
5    Linse

**Patentansprüche**

1. Verfahren zur spektralen Verbreiterung von Laserpulsen für die nichtlineare Pulskompression, bei dem die Laserpulse in eine optische Anordnung eingeführt werden, in der sie abwechselnd durch wenigstens einen Abschnitt, der wenigstens ein Medium (3) mit nichtlinearen optischen Eigenschaften enthält und in dem die Laserpulse durch Selbstphasenmodulation eine nichtlineare Phase erhalten, und wenigstens einen Abschnitt propagieren, in dem im Wesentlichen keine nichtlineare Phase durch Selbstphasenmodulation erzeugt wird, und die sich als Linsenleiter beschreiben lässt, bei dem die nichtlineare Phase nicht mehr kontinuierlich wie bei einer Propagation in einem Wellenleiter sondern an diskreten Orten aufgesammelt wird, wobei

- die Anordnung rein passiv ohne Verstärkung und ohne begrenzende Aperturen oder Filter ausgebildet ist,
- die Pulsleistung der Laserpulse größer als die kritische Leistung des Mediums (3) mit nichtlinearen optischen Eigenschaften gewählt wird,
- die mit jedem Durchgang durch das Medium (3) mit nichtlinearen optischen Eigenschaften erzeugte nichtlineare Phase der Laserpulse durch Wahl der Länge des Mediums (3) und der Intensität der Laserpulse so klein eingestellt wird, dass keine katastrophale Selbstfokussierung innerhalb des Mediums (3) auftritt,
- die Anzahl der Durchgänge zur Erzeugung der nichtlinearen Phase mindestens 10 beträgt und so gewählt wird, dass die Laserpulse beim Austritt aus der Anordnung eine gewünschte nichtlineare Phase aufweisen, und
- die optische Anordnung so dimensioniert wird, dass der Gouy-Parameter $\psi$ der Anordnung, der die bei einer Propagation durch das Medium (3) mit nichtlinearen optischen Eigenschaften und den Abschnitt ohne Erzeugung einer nichtlinearen Phase von der Grundmode der Anordnung aufgesammelte Gouy-Phase repräsentiert, weder in der Mitte noch direkt am Rand des Stabilitätsbereiches $0 \leq \psi \leq \pi$ der Anordnung liegt.

2. Verfahren nach Anspruch 1,
**dadurch gekennzeichnet,**
**dass** die Anordnung so dimensioniert wird, dass Resonanzen höherer transversaler Moden vermieden werden und der Gouy-Parameter $\psi$ näher am Rand als an der Mitte des Stabilitätsbereiches liegt.

3. Verfahren nach Anspruch 1 oder 2,
**dadurch gekennzeichnet,**
**dass** die Anordnung so dimensioniert wird, dass der Gouy-Parameter $\psi$ zwischen $0{,}03\pi$ und $0{,}24\pi$ oder zwischen $0{,}76\pi$ und $0{,}97\pi$ liegt.

4. Verfahren nach Anspruch 1 oder 2,
**dadurch gekennzeichnet,**
**dass** die Anordnung so dimensioniert wird, dass der Gouy-Parameter $\psi$ für eine bis zum Austritt aus der Anordnung aufgesammelte nichtlineare Phase von $2\pi$ zwischen $0{,}81\pi$ und $0{,}97\pi$ und für eine bis zum Austritt aus der Anordnung aufgesammelte nichtlineare Phase von $4\pi$ zwischen $0{,}88\pi$ und $0{,}96\pi$ liegt.

5. Verfahren nach einem der Ansprüche 1 bis 4,
**dadurch gekennzeichnet,**
**dass** die mit jedem Durchgang durch das Medium (3) mit nichtlinearen optischen Eigenschaften erzeugte nichtlineare Phase $\leq \pi/10$ gewählt wird.

6. Verfahren nach Anspruch 1 oder 2,
**dadurch gekennzeichnet,**
**dass** die Anordnung so dimensioniert wird, dass der Gouy-Parameter $\psi$ für eine bis zum Austritt aus der Anordnung aufgesammelte nichtlineare Phase von $8\pi$ zwischen $0{,}90\pi$ und $0{,}97\pi$ liegt und die mit jedem Durchgang durch das Medium (3) mit nichtlinearen optischen Eigenschaften erzeugte nichtlineare Phase $\leq \pi/20$ gewählt wird.

7. Verfahren nach einem der Ansprüche 1 bis 6,
**dadurch gekennzeichnet,**
**dass** als Medium (3) mit nichtlinearen optischen Eigenschaften ein Festkörpermedium oder ein gasförmiges Medium eingesetzt wird.

8. Verfahren nach Anspruch 7,
**dadurch gekennzeichnet,**
**dass** die nichtlinearen optischen Eigenschaften des gasförmigen Mediums über den Gasdruck eingestellt werden.

9. Verfahren nach Anspruch 7,
**dadurch gekennzeichnet,**
**dass** als gasförmiges Medium eine Gasmischung aus wenigstens zwei unterschiedlichen Gasen bei Atmosphärendruck eingesetzt wird und die nichtlinearen optischen Eigenschaften des gasförmigen Mediums über den Partialdruck der beiden unterschiedlichen Gase eingestellt werden.

10. Anordnung zur spektralen Verbreiterung von Laserpulsen für die nichtlineare Pulskompression,
die eine optische Grundmode aufweist und in der die Laserpulse nach der Einführung abwechselnd durch wenigstens einen Abschnitt, der wenigstens ein Medium (3) mit nichtlinearen optischen Eigenschaften enthält und in dem die Laserpulse durch Selbstphasenmodulation eine nichtlineare Phase erhalten, und wenigstens einen Abschnitt propagieren, in dem im Wesentlichen keine nichtlineare Phase durch Selbstphasenmodulation erzeugt wird, und die sich als Linsenleiter beschreiben lässt, bei dem die nichtlineare Phase nicht mehr kontinuierlich wie bei einer Propagation in einem Wellenleiter sondern an diskreten Orten aufgesammelt wird, wobei

- die Anordnung rein passiv ohne Verstärkung und ohne begrenzende Aperturen oder Filter ausgebildet ist,
- die Länge des Mediums (3) so gewählt ist, dass die mit jedem Durchgang durch das Medium (3) erzeugte nichtlineare Phase der Laserpulse bei einer Pulsleistung, die größer als die kritische Leistung des Mediums (3) mit nichtlinearen optischen Eigenschaften ist, eine so geringe Größe aufweist, dass keine katastrophale Selbstfokussierung innerhalb des Mediums (3) auftritt, und
- die optische Anordnung so dimensioniert ist, dass die Anzahl der Durchgänge zur Erzeugung der nichtlinearen Phase mindestens 10 beträgt und der Gouy-Parameter $\psi$ der Anordnung, der die bei einer Propagation durch das Medium (3) mit nichtlinearen optischen Eigenschaften und den Abschnitt ohne Erzeugung einer nichtlinearen Phase von der Grundmode aufgesammelte Gouy-Phase repräsentiert, weder in der Mitte noch direkt am Rand des Stabilitätsbereiches $0 \leq \psi \leq \pi$ der Anordnung liegt.

11. Anordnung nach Anspruch 10,
**dadurch gekennzeichnet,**
**dass** die Anordnung wenigstens zwei Spiegelelemente (2, 4) umfasst, an denen die Laserpulse mehrfach reflektiert werden.

12. Anordnung nach Anspruch 11,
**dadurch gekennzeichnet,**
**dass** die Anordnung als Multipass-Zelle aufgebaut ist.

13. Anordnung nach Anspruch 11 oder 12,
**dadurch gekennzeichnet,**

**dass** das Medium (3) als nichtlineares Element zwischen den Spiegelelementen (2, 4) angeordnet ist.

14. Anordnung nach einem der Ansprüche 11 bis 13,
**dadurch gekennzeichnet,**
**dass** wenigstens eines der Spiegelelemente (2, 4) ein Substrat aus einem optisch transparenten dielektrischen Material aufweist, das an einer Rückseite eine hochreflektierende Beschichtung aufweist, wobei das Substrat als das Medium (3) mit nichtlinearen optischen Eigenschaften dient.

15. Anordnung nach einem der Ansprüche 11 bis 14,
**dadurch gekennzeichnet,**
**dass** die Spiegelelemente (2, 4) eine Beschichtung tragen, durch die wenigstens eine teilweise Dispersionskompensation einer Dispersion erreicht wird, die die Laserpulse beim Durchgang durch die Anordnung erfahren.

**Claims**

1. Method for spectrally broadening laser pulses for non-linear pulse compression, in which the laser pulses are input into an optical assembly in which they propagate alternatingly through at least one section containing at least one medium (3) that has non-linear optical properties, and in which the laser pulses are endowed with a non-linear phase through self-phase modulation, and through at least one section in which substantially no non-linear phase is generated by self-phase modulation, and which assembly may be described as a lens conductor, in which the non-linear phase is no longer continuous as for propagation in a waveguide, but is acquired at discrete locations, wherein

   - the assembly is designed to be purely passive, without amplification and without limiting apertures or filters,
   - the pulse power of the laser pulses is selected to be greater than the critical power of the medium (3) with non-linear optical properties,
   - the non-linear phase of the laser pulses generated with each pass through the medium (3) with non-linear optical properties is set by selection of the length of the medium (3) and the intensity of the laser pulses to be so small that catastrophic self-focusing does not occur inside the medium (3),
   - the number of passes for producing the non-linear phase is at least 10 and is selected such that the laser pulses have a desired non-linear phase upon exiting the assembly, and
   - the optical assembly is dimensioned such that the Gouy parameter $\psi$ of the assembly, representing the Gouy phase acquired by the fundamental mode of the assembly during propagation through the medium (3) with non-linear optical properties and the section in which no non-linear phase is generated, lies neither in the middle nor directly on the edge of the stability range $0 \leq \psi \leq \pi$ of the assembly.

2. Method according to Claim 1,
**characterized in that**
the assembly is dimensioned such that resonances of higher transverse modes are avoided, and that the Gouy parameter $\psi$ lies closer to the edge than the middle of the stability range.

3. Method according to Claim 1 or 2,
**characterized in that**
the assembly is dimensioned such that the Gouy parameter $\psi$ is between $0.03\pi$ and $0.24\pi$ or between $0.76\pi$ and $0.97\pi$.

4. Method according to Claim 1 or 2,
**characterized in that**
the assembly is dimensioned such that the Gouy parameter $\psi$ lies between $0.81\pi$ and $0.97\pi$ for a non-linear phase of $2\pi$ acquired before exiting the assembly and between $0.88\pi$ and $0.96\pi$ for a non-linear phase of $4\pi$ acquired before exiting the assembly.

5. Method according to any one of Claims 1 to 4,
**characterized in that**
the non-linear phase generated with each pass through the medium (3) with non-linear optical properties is selected to be $\leq \pi/10$.

6. Method according to Claim 1 or 2,

**characterized in that**
the assembly is dimensioned such that the Gouy parameter $\psi$ lies between $0.90\pi$ and $0.97\pi$ for a non-linear phase of $8\pi$ acquired before exiting the assembly, and the non-linear phase generated with each pass through the medium (3) with non-linear optical properties is selected to be $\leq \pi/20$.

7. Method according to any one of Claims 1 to 6,
**characterized in that**
a solid medium or a gas-phase medium is used as the medium (3) with non-linear optical properties.

8. Method according to Claim 7,
**characterized in that**
the non-linear optical properties of the gas-phase medium are adjusted via the gas pressure.

9. Method according to claim 7,
**characterized in that**
a gas mixture of at least two different gases at atmospheric pressure is used as the gas-phase medium, and the non-linear optical properties of the gas-phase medium are adjusted by means of the partial pressure of the two different gases.

10. Assembly for spectrally broadening laser pulses for non-linear pulse compression,
which has an optical fundamental mode and in which after they are input the laser pulses propagate alternatingly through at least one section containing at least one medium (3) that has non-linear optical properties, and in which the laser pulses are endowed with a non-linear phase through self-phase modulation, and through at least one section in which substantially no non-linear phase is generated by self-phase modulation, and which may be described as a lens conductor, in which the non-linear phase is no longer continuous as for propagation in a waveguide, but is acquired at discrete locations, wherein

- the assembly is designed to be purely passive, without amplification and without limiting apertures or filters,
- the length of the medium (3) is selected such that the non-linear phase of the laser pulses generated with each pass through the medium (3) with a pulse power that is greater than the critical power of the medium (3) with non-linear optical properties is so small that catastrophic self-focusing does not occur inside the medium (3), and
- the optical assembly is dimensioned such that the number of passes for producing the non-linear phase is at least 10, and the Gouy parameter $\psi$ of the assembly, representing the Gouy phase acquired by the fundamental mode of the assembly during propagation through the medium (3) with non-linear optical properties and the section in which no non-linear phase is generated, lies neither in the middle nor directly on the edge of the stability range $0 \leq \psi \leq \pi$ of the assembly.

11. Assembly according to Claim 10,
**characterized in that**
the assembly comprises at least two mirror elements (2, 4), at which the laser pulses are reflected multiple times.

12. Assembly according to Claim 11,
**characterized in that**
the assembly is constructed as a multipass cell.

13. Assembly according to Claim 11 or 12,
**characterized in that**
the medium (3) is arranged as a non-linear element between the mirror elements (2, 4).

14. Assembly according to any one of Claims 11 to 13,
**characterized in that**
at least one of the mirror elements (2, 4) has a substrate of an optically transparent dielectric material, which has a highly reflective coating on a back side thereof, wherein the substrate serves as the medium (3) with non-linear optical properties.

15. Assembly according to any one of Claims 11 to 14,
**characterized in that**

the mirror elements (2, 4) are furnished with a coating, through which at least a partial compensation is achieved for a dispersion the laser pulses undergo when passing through the assembly.

**Revendications**

1. Procédé d'élargissement spectral d'impulsions laser pour la compression d'impulsions non linéaires, dans lequel les impulsions laser sont introduites dans un dispositif optique, dans lequel elles se propagent en alternance à travers au moins une portion, qui contient un milieu (3) avec des propriétés optiques non linéaires et dans lequel les impulsions laser atteignent une phase non linéaire par auto modulation de phase et au moins une portion, dans laquelle essentiellement aucune phase non linéaire n'est générée par auto modulation de phase, et qui sont décrites comme des conducteurs à lentilles, dans lequel la phase non linéaire n'est plus collectée en continu comme dans le cas d'une propagation dans un guide d'onde mais plutôt à des emplacements discrets, dans lequel

   - le dispositif est configuré de manière purement passive sans amplification et sans ouvertures ou filtres de limitation,
   - la puissance d'impulsion des impulsions laser est sélectionnée afin d'être plus grande que la puissance critique du milieu (3) avec des propriétés optiques non linéaires,
   - la phase des impulsions laser non linéaires générées par chaque passage à travers le milieu (3) avec des propriétés optiques non linéaires est réglée en sélectionnant la longueur du milieu (3) et l'intensité des impulsions laser de sorte qu'elle soient assez petites pour qu'aucune auto focalisation catastrophique ne se produise à l'intérieur du milieu (3),
   - le nombre des passages pour générer la phase non linéaire s'élève au moins à 10 et est sélectionné de telle sorte que les impulsions lasers présentent une phase non linéaire souhaitée lors de la sortie hors du dispositif, et
   - le dispositif optique est dimensionné de la sorte que le paramètre de Gouy $\psi$ du dispositif, qui représente la phase de Gouy Collectée lors d'une propagation à travers le milieu (3) avec des propriétés optiques non linéaires et la portion sans génération d'une phase non linéaire par le mode de base du dispositif, n'est situé ni au centre ni directement sur le bord de la plage de stabilité $0 \leq \psi \leq \pi$ du dispositif.

2. Procédé selon la revendication 1,
   **caractérisé en ce que**
   le dispositif est dimensionné de telle sorte que les résonances des modes transversaux supérieurs soient évitées et le paramètre de Gouy $\psi$ soit situé plus près du bord que du centre de la plage de stabilité.

3. Procédé selon la revendication 1 ou 2,
   **caractérisé en ce que**
   le dispositif est dimensionné de telle sorte que le paramètre $\psi$ soit situé entre $0,03\pi$ et $0,24\pi$ ou entre $0,76\pi$ et $0,97\pi$.

4. Procédé selon la revendication 1 ou 2,
   **caractérisé en ce que**
   le dispositif est dimensionné de telle sorte que le paramètre de Gouy $\psi$ pour une phase non linéaire collectée jusqu'à la sortie hors du dispositif de $2\Pi$ Soit comprise entre $0,81\pi$ et $0,97\pi$ et pour une phase non linéaire collectée jusqu'à la sortie hors du dispositif de $4\pi$ soit comprise entre $0,88\pi$ et $0,96\pi$.

5. Procédé selon une des revendications 1 à 4,
   **caractérisé en ce que**
   la phase non linéaire $\leq \pi/10$ générée par chaque passage à travers le milieu (3) avec des propriétés optiques non linéaires est sélectionnée.

6. Procédé selon la revendication 1 ou 2,
   **caractérisé en ce que**
   le dispositif est dimensionné de telle sorte que le paramètre de Gouy $\psi$ Pour une phase non linéaire collectée jusqu'à la sortie hors du dispositif de $8\pi$ soit compris entre $0,90\pi$ et $0,97\pi$ et la phase non linéaire $\leq \pi/20$ générée par chaque passage à travers le milieu (3) avec des propriétés optiques non linéaires est sélectionnée.

7. Procédé selon une des revendications 1 à 6,
   **caractérisé en ce que**
   comme un milieu (3) avec des propriétés optiques non linéaires un milieu solide ou un milieu gazeux est employé.

**8.** Procédé selon la revendication 7,
**caractérisé en ce que**
les propriétés optiques non linéaires du milieu gazeux sont réglées par l'intermédiaire de la pression de gaz.

**9.** Procédé selon la revendication 7,
**caractérisé en ce que**
comme un milieu gazeux un mélange de gaz d'au moins deux gaz différents à la pression atmosphérique est employé et les propriétés optiques non linéaires du milieu gazeux sont réglées par l'intermédiaire de la pression partielle des deux gaz différents.

**10.** Dispositif d'élargissement spectral d'impulsions laser pour la compression d'impulsions non linéaires, qui présente un mode de base optique et dans lequel les impulsions laser après l'introduction se propagent en alternance à travers au moins une portion, qui contient au moins un milieu (3) avec des propriétés optiques non linéaires et dans lequel les impulsions laser atteignent une phase non linéaire par auto modulation de phase, dans lequel essentiellement aucune phase non linéaire n'est générée par auto modulation de phase, et qui sont décrites comme des conducteurs à lentilles, dans lequel la phase non linéaire n'est plus collectée en continu comme dans le cas d'une propagation dans un guide d'onde mais plutôt à des emplacements discrets, dans lequel

- le dispositif est configuré de manière purement passive sans amplification et sans ouvertures ou filtres de limitation,
- la longueur du milieu (3) est sélectionnée de telle sorte que la phase non linéaire des impulsions laser générée par ce passage vers le milieu (3) en présence d'une puissance d'impulsion, qui est plus grande que la puissance critique du milieu (3) avec des propriétés optiques non linéaires, présente une grandeur assez minime pour que aucune auto focalisation catastrophique ne se produise à l'intérieur du milieu (3), et
- le dispositif optique est dimensionné de telle sorte que le nombre des passages pour générer la passe non linéaire s'élève au moins à 10 et le paramètre de Gouy $\psi$, qui représente le la phase de Gouy collectée lors d'une propagation à travers le milieu (3) avec des propriétés optiques non linéaires et la portion sans génération d'une phase non linéaire par le mode de base du dispositif, n'est situé ni au centre ni directement sur le bord de la plage de stabilité $0 \leq \psi \leq \pi$ du dispositif.

**11.** Dispositif selon la revendication 10,
**caractérisé en ce que**
le dispositif comprend au moins deux éléments de miroirs (2, 4), les impulsions laser sont réfléchies plusieurs fois.

**12.** Dispositif selon la revendication 11,
**caractérisé en ce que**
le dispositif est conçu comme une cellule Multipass.

**13.** Dispositif selon la revendication 11 ou 12,
**caractérisé en ce que**
le milieu (3) est disposé comme un élément non linéaire entre les éléments de miroirs (2, 4).

**14.** Dispositif selon une des revendications 11 à 13,
**caractérisé en ce que**
au moins un des éléments de miroirs (2, 4) présente un substrat constitué d'un matériau diélectrique optique transparent, qui présente sur une face arrière un revêtement à haute réflectivité, dans lequel le substrat sert de milieu (3) avec des propriétés optiques non linéaires.

**15.** Dispositif selon une des revendications 11 à 14,
**caractérisé en ce que**
les éléments de miroirs (2, 4) portent un revêtement, par l'intermédiaire duquel au moins une compensation de dispersion partielle d'une dispersion est atteinte, que subissent les impulsions laser lors du passage à travers le dispositif.

spektrale Verbreiterung im Wellenleiter:

$\phi_{NL}$

$z$

spektrale Verbreiterung im Linsenleiter:

$\phi_{NL}$ $\phi_{NL}$ $\phi_{NL}$ $\phi_{NL}$ $\phi_{NL}$

$\psi$ $\psi$ $\psi$ $\psi$

$z$

<u>Fig. 1</u>

2

1

2

<u>Fig. 3</u>

Fig. 2

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CH. JOCHER et al.** Sub 25 fs pulses from solid-core nonlinear compression stage at 250 W of average power. *Opt. Lett.,* 2012, vol. 37, 4407-4409
- **S. HÄDRICH et al.** Nonlinear compression to sub-30-fs, 0.5 mJ pulses at 135 W of average power. *Opt. Lett.,* 2013, vol. 38, 3866-3869
- **A. KLENKE et al.** Divided-pulse nonlinear compression. *Opt. Lett.,* 2013, vol. 38, 4593-4596
- **J. ROTHHARDT et al.** 1 MHz repetition rate hollow fiber pulse compression to sub-100-fs duration at 100 W average power. *Opt. Lett.,* 2011, vol. 36, 4605-4607
- **F. EMAURY et al.** Beam delivery and pulse compression to sub-50 fs of a modelocked thin-disk laser in a gas-filled Kagome-type HC-PCF fiber. *Opt. Express,* 2013, vol. 21, 4986-4994
- **C. FOURCADE-DUTIN et al.** Milli-Joule femtosecond laser-pulse delivery and compression in hypocycloid core Kagome HC-PCF. *CLEO 2013,* 2013
- **M. SCHULZ et al.** Yb:YAG Innoslab amplifier: efficient high repetition rate subpicosecond pumping system for optical parametric chirped pulse amplification. *Opt. Lett.,* 2011, vol. 36, 2456-2458
- **E. MEVEL et al.** Extracavity compression technique for high-energy femtosecond pulses. *J. Op. Soc. Am. B,* 2003, vol. 20, 105-108
- **C.G. DURFEE III et al.** *Opt. Lett.,* 1992, vol. 17, 37